(19) Europäisches Patentamt
European Patent Office
Office européen des brevets

(11) **EP 4 035 960 A1**

(12) **EUROPEAN PATENT APPLICATION**
published in accordance with Art. 153(4) EPC

(43) Date of publication:
**03.08.2022 Bulletin 2022/31**

(21) Application number: **20868473.8**

(22) Date of filing: **05.06.2020**

(51) International Patent Classification (IPC):
**B60W 30/10** *(2006.01)* **B60W 30/095** *(2012.01)*
**B60W 40/04** *(2006.01)* **B60W 40/06** *(2012.01)*
**G01C 21/34** *(2006.01)* **G08G 1/00** *(2006.01)*
**G08G 1/0969** *(2006.01)* **G08G 1/16** *(2006.01)*

(52) Cooperative Patent Classification (CPC):
**B60W 30/095; B60W 30/10; B60W 40/04;
B60W 40/06; G01C 21/34; G08G 1/00;
G08G 1/0969; G08G 1/16**

(86) International application number:
**PCT/JP2020/022258**

(87) International publication number:
**WO 2021/059601 (01.04.2021 Gazette 2021/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.09.2019 JP 2019176513
17.01.2020 JP 2020005656**

(71) Applicant: **AISIN CORPORATION
Aichi 448-8650 (JP)**

(72) Inventor: **NIMURA, Mitsuhiro
Katiya, Aichi 448-8650 (JP)**

(74) Representative: **Cabinet Beau de Loménie
158, rue de l'Université
75340 Paris Cedex 07 (FR)**

(54) **DRIVE ASSISTANCE DEVICE AND COMPUTER PROGRAM**

(57) There are provided a drive assistance device and a computer program that can generate, based on information about section lines on roads, a travel path for a vehicle that takes into account restrictions, etc., on the roads, and can appropriately provide drive assistance. Specifically, it is configured to obtain a planned travel route along which a vehicle travels, generate, using high-precision map information (15) including at least information about section lines, a static travel path which is a travel path along which the vehicle is recommended to travel on a road included in the planned travel route, and provide drive assistance for the vehicle based on the static travel path.

*FIG. 8*

EP 4 035 960 A1

**Description**

TECHNICAL FIELD

The present invention relates to a drive assistance device and a computer program that provide drive assistance for a vehicle.

BACKGROUND ART

In recent years, as vehicle's travel modes, there has been newly proposed an autonomous driving assistance system that aids in user's vehicle driving by performing some or all of user's driving operations by a vehicle side, in addition to manual travel where travel is performed based on user's driving operations. In the autonomous driving assistance system, for example, a current location of a vehicle, a lane in which the vehicle travels, the locations of other vehicles around the vehicle are detected whenever necessary, and vehicle control of steering, a drive source, a brake, etc., is autonomously performed so that the vehicle travels along a preset route.
In addition, when travel by autonomous driving assistance is performed, a travel path recommended to travel is generated in advance on a road on which the vehicle travels, based on a planned travel route for the vehicle, map information, etc., and control is performed to allow the vehicle to travel along the generated travel path. For example, US 2019/0155292 A proposes a technique for generating, when travel by autonomous driving assistance is performed, future travel paths for a vehicle over some brief period such as 2 seconds, 10 seconds, and 16 seconds from a current time, using a route to a destination and map information of an area around a current location of the vehicle.

CITATIONS LIST

PATENT LITERATURE

Patent Literature 1: US 2019/0155292 A (page 5 and FIG. 6)

SUMMARY OF INVENTION

TECHNICAL PROBLEMS

Here, for a road on which the vehicle travels, it is not always that the vehicle can freely select a travel path and travel on the road, and for example, there may be a section in which movement of the vehicle between lanes is restricted, or a region in which it is not desirable for the vehicle to travel (e.g., a guide zone) may be set on the road. However, in the above-described Patent Literature 1, generation of a travel path taking into account such restrictions, etc., on the road is not performed, and there has been a possibility that a lane change is made in a section in which movement of the vehicle between lanes is restricted, or a travel path is generated that runs through a region in which it is not desirable for the vehicle to travel.
The present invention is made to solve the above-described conventional problems, and provides a drive assistance device and a computer program in which, when drive assistance for a vehicle is provided, based on information about section lines on roads, a travel path for a vehicle that takes into account restrictions, etc., on the roads can be generated, and drive assistance can be appropriately provided.

SOLUTIONS TO PROBLEMS

To provide the above-described drive assistance device, a first drive assistance device according to the present invention includes: planned travel route obtaining means for obtaining a planned travel route along which a vehicle travels; static path generating means for generating a static travel path using map information including at least information about section lines, the static travel path being a travel path along which a vehicle is recommended to travel on a road included in the planned travel route; and drive assistance means for providing drive assistance for a vehicle based on the static travel path.
Note that the term "drive assistance" refers to a function of performing or aiding in at least some of vehicle operations of a driver instead of the driver, or provision of display guidance or voice guidance for assisting in driving.
Note also that the term "information about section lines" may be information that identifies the types or layout of section lines themselves that mark off lanes, or may be information that identifies whether a lane change can be made between adjacent lanes, or may be information that directly or indirectly identifies lane configurations.
In addition, a second drive assistance device according to the present invention includes: planned travel route obtaining means for obtaining a planned travel route along which a vehicle travels; static path generating means for generating, using map information, a static travel path for a section including at least course change locations that are first and second course change locations from a current location of a vehicle among course change locations, the static travel path being a travel path along which a vehicle is recommended to travel on a road included in the planned travel route, and the course change locations being locations where a course of a vehicle changes when a vehicle travels along the planned travel route; and drive assistance means for providing drive assistance for a vehicle based on the static travel path.

In addition, a third drive assistance device according to the present invention includes: road conditions obtaining means for obtaining road conditions of a predetermined detection area around a vehicle; planned travel route obtaining means for obtaining a planned travel route along which a vehicle travels; static path generating means for generating, using map information, a static travel path for a region including outside the detection area, the static travel path being a travel path along which a vehicle is recommended to travel on a road included in the planned travel route; dynamic travel path generating means for generating a dynamic travel path for the detection area, using map information and surrounding road conditions obtained by a vehicle, the dynamic travel path being a travel path along which a vehicle is recommended to travel on a road included in the planned travel route; and drive assistance means for providing drive assistance for a vehicle based on a generated travel path, the generated travel path being a travel path generated using the static travel path and the dynamic travel path.

In addition, a first computer program according to the present invention is a program that generates assistance information used for drive assistance provided on a vehicle. Specifically, the first computer program causes a computer to function as: planned travel route obtaining means for obtaining a planned travel route along which a vehicle travels; static path generating means for generating a static travel path using map information including at least information about section lines, the static travel path being a travel path along which a vehicle is recommended to travel on a road included in the planned travel route; and drive assistance means for providing drive assistance for a vehicle based on the static travel path.

In addition, a second computer program according to the present invention is a program that generates assistance information used for drive assistance provided on a vehicle. Specifically, the second computer program causes a computer to function as: planned travel route obtaining means for obtaining a planned travel route along which a vehicle travels; static path generating means for generating, using map information, a static travel path for a section including at least course change locations that are first and second course change locations from a current location of a vehicle among course change locations, the static travel path being a travel path along which a vehicle is recommended to travel on a road included in the planned travel route, and the course change locations being locations where a course of a vehicle changes when a vehicle travels along the planned travel route; and drive assistance means for providing drive assistance for a vehicle based on the static travel path.

In addition, a third computer program according to the present invention is a program that generates assistance information used for drive assistance provided on a vehicle. Specifically, the third computer program causes a computer to function as: road conditions obtaining means for obtaining road conditions of a predetermined detection area around a vehicle; planned travel route obtaining means for obtaining a planned travel route along which a vehicle travels; static path generating means for generating, using map information, a static travel path for a region including outside the detection area, the static travel path being a travel path along which a vehicle is recommended to travel on a road included in the planned travel route; dynamic travel path generating means for generating a dynamic travel path for the detection area, using map information and surrounding road conditions obtained by a vehicle, the dynamic travel path being a travel path along which a vehicle is recommended to travel on a road included in the planned travel route; and drive assistance means for providing drive assistance for a vehicle based on a generated travel path, the generated travel path being a travel path generated using the static travel path and the dynamic travel path.

ADVANTAGEOUS EFFECTS OF INVENTION

According to the first drive assistance device and computer program according to the present invention that have the above-described configurations, when the vehicle travels by drive assistance, it becomes possible to generate, based on information about section lines on roads, a travel path for the vehicle that takes into account restrictions, etc., on the roads. Particularly, even when a section in which movement of the vehicle between lanes is restricted or a region in which it is not desirable for the vehicle to travel (e.g., a guide zone) is set on a road, it becomes possible to generate a more appropriate travel path for the vehicle compared to conventional ones. Then, by providing drive assistance based on the generated travel path, the drive assistance can be appropriately provided.

In addition, according to the second drive assistance device and computer program according to the present invention that have the above-described configurations, when the vehicle travels by drive assistance, even when a location where a course of the vehicle changes is present in front of the vehicle in a traveling direction, it becomes possible to generate a travel path for the vehicle for a wider section including the location. Then, by providing drive assistance based on the generated travel path, the drive assistance can be appropriately provided.

In addition, according to the third drive assistance device and computer program according to the present invention that have the above-described configurations, a planned travel route is obtained as a future long-distance plan for the vehicle, a travel path along which the vehicle is recommended to travel is generated as a future intermediate-distance plan for the vehicle, based on map information, and for a detection area in which road conditions can be obtained, a travel path along which the vehicle is recommended to travel is generated as a future short-distance plan for the vehicle, based on the obtained road conditions in addition to map information. As a result, it becomes possible to generate an appropriate travel plan using materials that can be obtained for each distance from the vehicle. Particularly, by generating each travel path targeting a narrow region in which road conditions around the vehicle can be obtained and a wider region, it becomes possible to select an appropriate travel path based on the state of the vehicle.

BRIEF DESCRIPTION OF DRAWINGS

FIG. 1 is a schematic configuration diagram showing a drive assistance system according to the present embodiment.
FIG. 2 is a block diagram showing a configuration of the drive assistance system according to the present embodiment.
FIG. 3 is a block diagram showing a navigation device according to the present embodiment.
FIG. 4 is a flowchart of an autonomous driving assistance program according to the present embodiment.
FIG. 5 is a diagram showing an area for which high-precision map information is obtained.
FIG. 6 is a flowchart of a subprocess program of a static travel path generating process.
FIG. 7 is a diagram showing an example of a planned travel route of a vehicle.
FIG. 8 is a diagram showing an example of a lane network constructed for the planned travel route shown in FIG. 7.
FIG. 9 is a diagram showing a relationship between the number of lane changes and a lane cost.
FIG. 10 is a diagram describing a method of calculating a static travel path for a travel section, involving lane changes.
FIG. 11 is a diagram describing a method of calculating a static travel path within an intersection.
FIG. 12 is a flowchart of a subprocess program of a speed plan generating process.
FIG. 13 is a diagram showing an example of a speed plan to be generated.
FIG. 14 is a flowchart of a subprocess program of a dynamic travel path generating process.
FIG. 15 is a diagram showing an example of an avoidance path which is one of dynamic travel paths.
FIG. 16 is a diagram showing an example of an avoidance path which is one of dynamic travel paths.
FIG. 17 is a diagram showing an example of a following path which is one of dynamic travel paths.
FIG. 18 is a diagram showing an example of a following path which is one of dynamic travel paths.
FIG. 19 is a flowchart of a subprocess program of a travel path reflecting process.
FIG. 20 is a flowchart of a subprocess program of a speed plan modifying process.

DESCRIPTION OF EMBODIMENTS

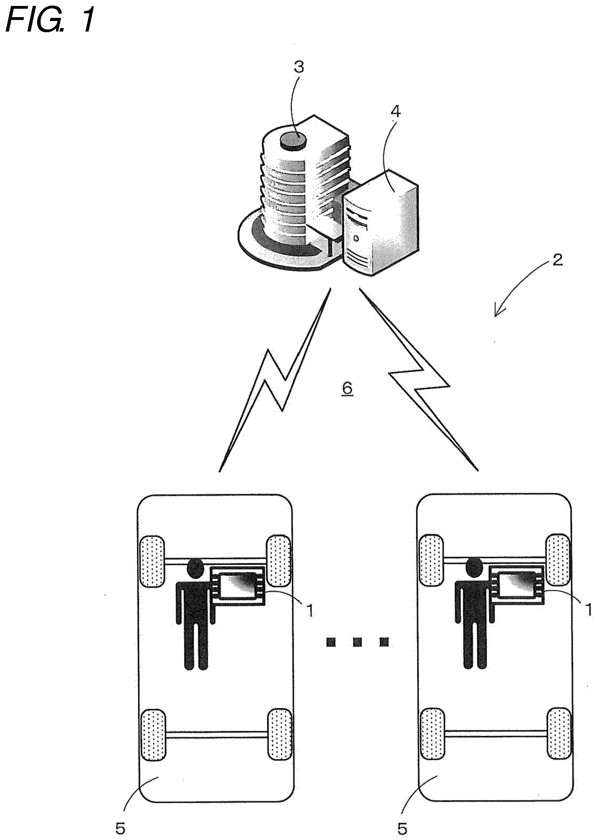

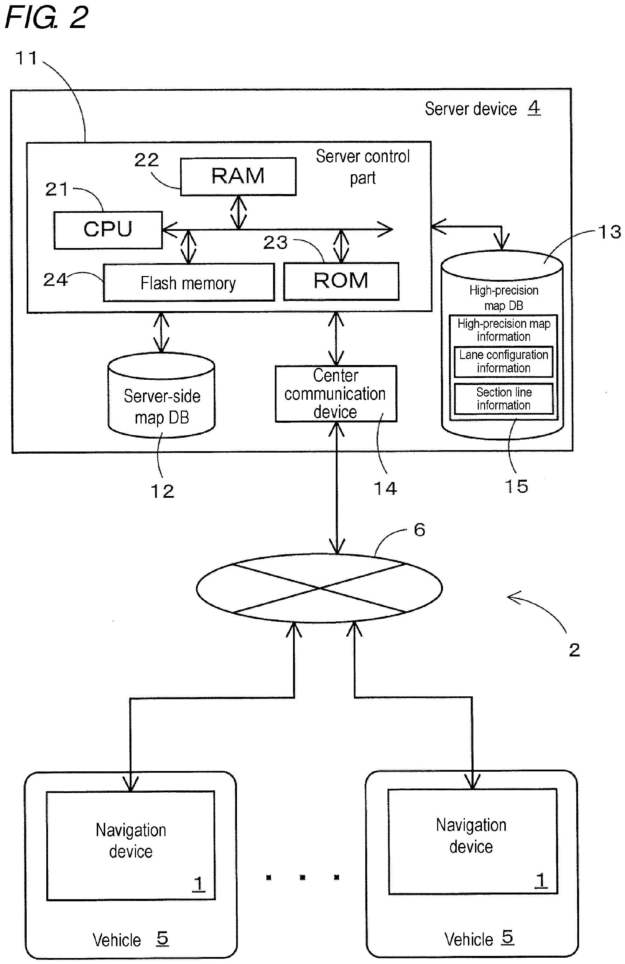

One embodiment in which a drive assistance device according to the present invention embodies a navigation device 1 will be described in detail below with reference to the drawings. First, a schematic configuration of a drive assistance system 2 including navigation devices 1 according to the present embodiment will be described using FIGS. 1 and 2. FIG. 1 is a schematic configuration diagram showing the drive assistance system 2 according to the present embodiment. FIG. 2 is a block diagram showing a configuration of the drive assistance system 2 according to the present embodiment.

As shown in FIG. 1, the drive assistance system 2 according to the present embodiment basically includes a server device 4 provided in an information delivery center 3; and navigation devices 1 that are mounted on vehicles 5 to provide various types of assistance related to autonomous driving of the vehicles 5. In addition, the server device 4 and the navigation devices 1 are configured to be able to perform transmission and reception of electronic data with each other through a communication network 6. Note that instead of the navigation devices 1, other in-vehicle devices mounted on the vehicles 5 or vehicle control devices that perform control about the vehicles 5 may be used.

Here, the vehicles 5 each are a vehicle that can perform assistance travel by autonomous driving assistance where the vehicle autonomously travels along a preset route or a road independently of user's driving operations, in addition to manual driving travel where the vehicle 5 travels based on user's driving operations.

In addition, the configuration may be such that autonomous driving assistance is provided for all road sections or provided only while the vehicle travels along a specific road section (e.g., an expressway having a gate (it does not matter whether or not there is a person or whether or not a toll is collected) at a boundary). In the following description, it is assumed that an autonomous driving section in which autonomous driving assistance for the vehicle is provided also includes parking lots in addition to all road sections including general roads and expressways, and description will be made assuming that autonomous driving assistance is basically provided during a period from when the vehicle starts to travel until the vehicle finishes travel. Note, however, that it is desirable that when the vehicle travels on the autonomous driving section, autonomous driving assistance not always be provided but be provided only in a situation in which provision of autonomous driving assistance is selected by the user (e.g., an autonomous driving start button is turned on) and it is determined that travel by autonomous driving assistance can be performed. Meanwhile, the vehicles 5 may be vehicles that can only perform assistance travel by autonomous driving assistance.

In vehicle control performed during autonomous driving assistance, for example, a current location of the vehicle, a lane in which the vehicle travels, and the location of an obstacle around the vehicle are detected whenever necessary, and vehicle control of steering, a drive source, a brake, etc., is autonomously performed so that the vehicle travels along a travel path generated by the navigation device 1 as will be described later, and at a speed in accordance with a speed plan that is also generated. Note that in assistance travel by autonomous driving assistance of the present embodiment, for a lane change or a left or right turn, too, the vehicle travels by performing the above-described vehicle control by autonomous driving assistance, but the configuration may be such that special travel such as a lane change or a left or right turn is performed by manual driving instead of performing travel by autonomous driving assistance.

Meanwhile, the navigation devices 1 each are an in-vehicle device mounted on a vehicle 5, and displays a map of an area around the location of the vehicle based on map data included in the navigation device 1 or map data obtained from an external source, displays a current location of the vehicle in a map image, or provides traveling guidance along a set guidance route. In the present embodiment, particularly, when the vehicle performs assistance travel by autonomous driving assistance, various types of assistance information about the autonomous driving assistance are generated. The assistance information includes, for example, a travel path along which the vehicle is recommended to travel and a speed plan indicating vehicle speed used upon traveling. Note that details of the navigation device 1 will be described later.

In addition, the server device 4 performs a route search in response to a request from a navigation device 1. Specifically, when a destination is set on the navigation device 1 or when re-searching (rerouting) of a route is performed, information required for a route search such as a point of departure and a destination is transmitted with a route search request (note, however, that in a case of re-searching, information about a destination does not necessarily need to be transmitted) from the navigation device 1 to the server device 4. Then, the server device 4 having received the route search request performs a route search using map information included in the server device 4, to identify a recommended route from the point of departure to the destination. Thereafter, the identified recommended route is transmitted to the navigation device 1 which is a source of the request. Then, the navigation device 1 provides a user with information about the received recommended route, or sets the recommended route as a guidance route and generates various types of assistance information about autonomous driving assistance, in accordance with the guidance route. By this, even when the map information included in the navigation device 1 at the time of the route search is an old version of map information, or the navigation device 1 does not have map information itself, it becomes possible to provide an appropriate recommended route to the destination, based on the latest version of map information included in the server device 4.

Furthermore, the server device 4 has high-precision map information which is map information with a higher degree of precision, separately from normal map information used for the above-described route search. The high-precision map information includes, for example, information about the lane configurations of roads (lane-by-lane road configurations, curvature, lane widths, etc.) and section lines painted on roads (roadway centerlines, lane boundary lines, roadway outer lines, guidelines, etc.). In addition to such information, the high-precision map information also includes information about intersection configurations, information about parking lots, etc. The server device 4 delivers high-precision map information in response to a request from a navigation device 1, and the navigation device 1 generates various types of assistance information about autonomous driving assistance as will be described later, using the high-precision map information delivered from the server device 4. Note that the high-precision map information is basically map information targeting only roads (links) and areas around the roads, but may be map information also including areas other than the areas around the roads.

Note, however, that the above-described route search process does not necessarily need to be performed by the server device 4, and if a navigation device 1 has map information, then the navigation device 1 may perform the route search process. Note also that high-precision map information may be included in advance in the navigation device 1, instead of the server device 4 delivering the high-precision map information.

In addition, the communication network 6 includes multiple base stations disposed all over the country and telecommunications companies that manage and control the base stations, and is formed by connecting the base stations to the telecommunications companies by wire (optical fiber, ISDN, etc.) or wirelessly. Here, the base stations each include a transceiver and an antenna that perform communication with navigation devices 1. While the base station performs radio communication with a telecommunications company, the base station serves as an end of the communication network 6 and plays a role in relaying communication of navigation devices 1 present in an area (cell) in which radio waves from the base station reach, to the server device 4.

Next, a configuration of the server device 4 in the drive assistance system 2 will be described in more detail using FIG. 2. The server device 4 includes, as shown in FIG. 2, a server control part 11, a server-side map DB 12 serving as information recording means connected to the server control part 11, a high-precision map DB 13, and a server-side communication device 14.

The server control part 11 is a control unit (an MCU, an MPU, etc.) that performs overall control of the server device 4, and includes a CPU 21 serving as a computing device and a control device; and internal storage devices such as a RAM 22 used as a working memory when the CPU 21 performs various types of arithmetic processing, a ROM 23 having recorded therein a program for control, etc., and a flash memory 24 that stores a program read from the ROM 23. Note that the server control part 11 includes various types of means serving as processing algorithms with an ECU of a navigation device 1 which will be described later.

Meanwhile, the server-side map DB 12 is storage means for storing server-side map information which is the latest version of map information registered based on input data from an external source and input operations. Here, the server-side map information includes a road network and various types of information required for a route search, route guidance, and map display. The server-side map information includes, for example, network data including nodes and links that indicate a road network, link data about roads (links), node data about node points, intersection data about each intersection, location data about locations such as facilities, map display data for displaying a map, search data for searching for a route, and retrieval data for retrieving a location.

In addition, the high-precision map DB 13 is storage means for storing high-precision map information 15 which is map information with a higher degree of precision than the above-described server-side map information. The high-precision map information 15 is particularly map information that stores more detailed information about roads, parking lots, etc., where the vehicle is to travel, and in the present embodiment, the high-precision map information 15 includes, for example, information about the lane configurations of roads (lane-by-lane road configurations, curvature, lane widths, etc.) and section lines (roadway centerlines, lane boundary lines, roadway outer lines, guidelines, etc.) painted on roads. In addition, the high-precision map DB 13 further records the following data: for each link that forms a road, there are recorded shape complement point data for identifying width, gradient, a cant, a bank, the state of a road surface, and the shape of a link between nodes (e.g., in a case of a curved road, the shape of a curve) of the road to which the link belongs, and data representing a merge section, a road structure, the number of lanes on the road, a location where the number of lanes decreases, a location where the width becomes narrower, a railroad crossing, etc.; for a corner, there is recorded data representing the radius of curvature, an intersection, a T-junction, the entry and exit of the corner, etc.; for road attributes, there is recorded data representing downhill slopes, uphill slopes, etc.; and for road types, there is recorded data representing toll roads such as national expressways, urban expressways, automobile roads, general toll roads, and toll bridges, in addition to general roads such as national highways, prefectural highways, and narrow streets. Particularly, in the present embodiment, in addition to the number of lanes on the road, there is also stored information that identifies the connection between a passage segment in a traveling direction for each lane and a road (specifically, which lane is connected to which road at a divergence). Furthermore, there is also stored a speed limit set for the road. In addition, the high-precision map information is basically map information targeting only roads (links) and areas around the roads, but may be map information also including areas other than the areas around the roads. In addition, although in the example shown in FIG. 2, the server-side map information stored in the server-side map DB 12 and the high-precision map information 15 are different pieces of map information, the high-precision map information 15 may be a part of the server-side map information.

Meanwhile, the server-side communication device 14 is a communication device for performing communication with the navigation device 1 of each vehicle 5 through the communication network 6. In addition, the server-side communication device 14 can also receive traffic information including pieces of information such as congestion information, regulation information, and traffic accident information which are transmitted from an Internet network, traffic information centers, e.g., a VICS (registered trademark: Vehicle Information and Communication System) center, etc., in addition to the navigation devices 1.

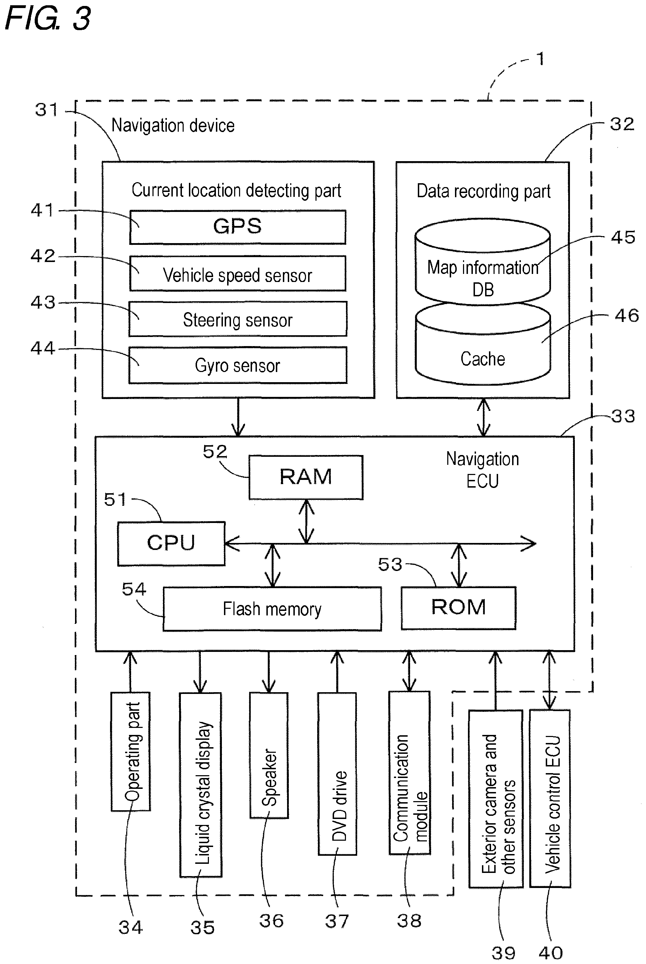

Next, a schematic configuration of the navigation device 1 mounted on the vehicle 5 will be described using FIG. 3. FIG. 3 is a block diagram showing the navigation device 1 according to the present embodiment.

As shown in FIG. 3, the navigation device 1 according to the present embodiment includes a current location detecting part 31 that detects a current location of the vehicle having the navigation device 1 mounted thereon; a data recording part 32 having various types of data recorded therein; a navigation ECU 33 that performs various types of arithmetic processing based on inputted information; an operating part 34 that accepts operations from a user; a liquid crystal display 35 that displays to the user, for example, a map of an area around the vehicle and information about a guidance route (a planned travel route for the vehicle) set on the navigation device 1; a speaker 36 that outputs voice guidance about route guidance; a DVD drive 37 that reads a DVD which is a storage medium; and a communication module 38 that performs communication with information centers such as a probe center and a VICS center. In addition, an exterior camera 39 and various sensors which are installed on the vehicle having the navigation device 1 mounted thereon are connected to the navigation device 1 through an in-vehicle network such as a CAN. Furthermore, the navigation device 1 is also connected to a vehicle control ECU 40 in a two-way communicable manner that performs various types of control on the vehicle having the navigation device 1 mounted thereon.

The components included in the navigation device 1 will be described in turn below.

The current location detecting part 31 includes a GPS 41, a vehicle speed sensor 42, a steering sensor 43, a gyro sensor 44, etc., and can detect a current vehicle location, orientation, a travel speed of the vehicle, a current time, etc. Here, particularly, the vehicle speed sensor 42 is a sensor for detecting the traveling distance and vehicle speed of the vehicle, and generates pulses according to the rotation of drive wheels of the vehicle and outputs a pulse signal to the navigation ECU 33. Then, the navigation ECU 33 counts the generated pulses and thereby calculates a rotational speed of the drive wheels and a traveling distance. Note that the navigation device 1 does not need to include all of the above-described four types of sensors, and the navigation device 1 may be configured to include only one or a plurality of types of sensors among those sensors.

In addition, the data recording part 32 includes a hard disk (not shown) serving as an external storage device and a recording medium; and a recording head (not shown) which is a driver for reading a map information DB 45, a cache 46, a predetermined program, etc., which are recorded on the hard disk, and writing predetermined data to the hard disk. Note that the data recording part 32 may include a flash memory, a memory card, or an optical disc such as a CD or a DVD, instead of a hard disk. In addition, in the present embodiment, since, as described above, the server device 4 searches for a route to a destination, the map information DB 45 may be omitted.

Here, the map information DB 45 is storage means having stored therein, for example, link data about roads (links), node data about node points, search data used in processes related to a route search or change, facility data about facilities, map display data for displaying a map, intersection data about each intersection, and retrieval data for retrieving locations.

On the other hand, the cache 46 is storage means for saving high-precision map information 15 that is delivered from the server device 4 in the past. A saving period can be set as appropriate, and may be, for example, a predetermined period (e.g., one month) from storage or may be until an ACC power supply (accessory power supply) of the vehicle is turned off. In addition, after the amount of data stored in the cache 46 reaches an upper limit, the data may be sequentially deleted in order from oldest to newest. Then, the navigation ECU 33 generates various types of assistance information about autonomous driving assistance, using the high-precision map information 15 stored in the cache 46. Details will be described later.

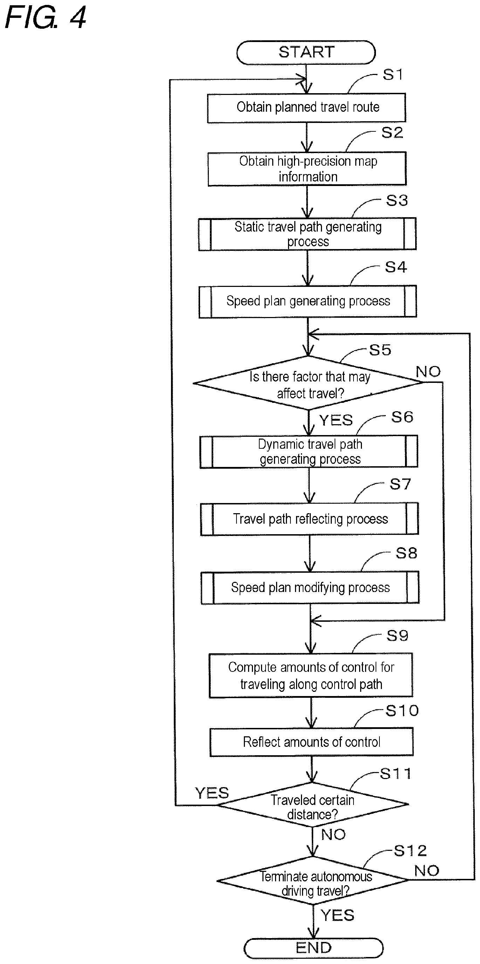

Meanwhile, the navigation ECU (electronic control unit) 33 is an electronic control unit that performs overall control of the navigation device 1, and includes a CPU 51 serving as a computing device and a control device; and internal storage devices such as a RAM 52 that is used as a working memory when the CPU 51 performs various types of arithmetic processing and that stores route data obtained when a route is searched, etc., a ROM 53 having recorded therein an autonomous driving assistance program (see FIG. 4) which will be described later, etc., in addition to a program for control, and a flash memory 54 that stores a program read from the ROM 53. Note that the navigation ECU 33 includes various types of means serving as processing algorithms. For example, planned travel route obtaining means obtains a planned travel route along which the vehicle travels. Static path generating means generates, using the high-precision map information 15 including at least information about section lines, a static travel path which is a travel path along which the vehicle is recommended to travel on a road included in the planned travel route. Autonomous driving assistance means provides autonomous driving assistance for the vehicle based on the static travel path.

The operating part 34 is operated, for example, upon inputting a point of departure which is a travel start location and a destination which is a travel end location, and includes a plurality of operating switches such as various types of keys and buttons (not shown). Then, based on a switch signal outputted by, for example, depression of a given switch, the navigation ECU 33 performs control to perform a corresponding type of operation. Note that the operating part 34 may include a touch panel provided on the front of the liquid crystal display 35. Note also that the operating part 34 may include a microphone and a voice recognition device.

In addition, on the liquid crystal display 35 there are displayed a map image including roads, traffic information, operation guidance, an operation menu, guidance on keys, guidance information in accordance with a guidance route (planned travel route), news, weather forecasts, time, e-mails, TV programs, etc. Note that instead of the liquid crystal display 35, a HUD or an HMD may be used.

In addition, the speaker 36 outputs voice guidance that provides guidance on travel along a guidance route (planned travel route) or guidance on traffic information, based on an instruction from the navigation ECU 33.

In addition, the DVD drive 37 is a drive that can read data recorded on a recording medium such as a DVD or a CD. Then, based on the read data, for example, music or video is played back or the map information DB 45 is updated. Note that instead of the DVD drive 37, a card slot for performing reading and writing on a memory card may be provided.

In addition, the communication module 38 is a communication device for receiving traffic information, probe information, weather information, etc., which are transmitted from traffic information centers, e.g., a VICS center and a probe center, and corresponds, for example, to a mobile phone or a DCM. In addition, the communication module 38 also includes a vehicle-to-vehicle communication device that performs communication between vehicles and a road-side-device-to-vehicle communication device that performs communication with a road-side device. In addition, the communication module 38 is also used to transmit and receive route information searched by the server device 4 and the high-precision map information 15 to/from the server device 4.

In addition, the exterior camera 39 is composed of, for example, a camera using a solid-state imaging device such as a CCD, and is attached to the upper side of a front bumper of the vehicle and is placed such that an optical-axis direction is downward at a predetermined angle relative to the horizontal. When the vehicle travels on an autonomous driving section, the exterior camera 39 captures an image of an area in front of the vehicle in a traveling direction. In addition, the navigation ECU 33 performs image processing on the captured image having been captured, and thereby detects section lines painted on a road on which the vehicle travels, and obstacles such as other vehicles around the vehicle, and generates various types of assistance information about autonomous driving assistance, based on results of the detection. For example, when an obstacle is detected, a new travel path for the vehicle to travel avoiding or following the obstacle is generated. Note that the exterior camera 39 may be configured to be disposed on the rear or side of the vehicle instead of the front of the vehicle. Note also that for means for detecting obstacles, a sensor such as a millimeter-wave radar or a laser sensor, vehicle-to-vehicle communication, or road-side-device-to-vehicle communication may be used instead of a camera.

In addition, the vehicle control ECU 40 is an electronic control unit that controls the vehicle having the navigation device 1 mounted thereon. In addition, driving parts of the vehicle such as steering, a brake, and an accelerator are connected to the vehicle control ECU 40, and in the present embodiment, particularly, after the vehicle starts autonomous driving assistance, each of the driving parts is controlled, by which autonomous driving assistance for the vehicle is provided. In addition, when an override is performed by the user during autonomous driving assistance, the fact that the override is performed is detected.

Here, the navigation ECU 33 transmits various types of assistance information about autonomous driving assistance which is generated by the navigation device 1 to the vehicle control ECU 40 through the CAN after starting traveling. Then, the vehicle control ECU 40 provides autonomous driving assistance after starting traveling, using the received various types of assistance information. The assistance information includes, for example, a travel path along which the vehicle is recommended to travel and a speed plan indicating vehicle speed used upon traveling.

Next, an autonomous driving assistance program executed by the CPU 51 of the navigation device 1 according to the present embodiment that has the above-described configuration will be described based on FIG. 4. FIG. 4 is a flowchart of an autonomous driving assistance program according to the present embodiment. Here, the autonomous driving assistance program is a program that is executed after the ACC power supply (accessory power supply) of the vehicle is turned on and when travel of the vehicle by autonomous driving assistance starts, and that performs assistance travel by autonomous driving assistance in accordance with assistance information generated by the navigation device 1. In addition, the program shown in flowcharts of the following FIGS. 4, 6, 12, 14, 19, and 20 is stored in the RAM 52 or the ROM 53 included in the navigation device 1, and is executed by the CPU 51.

First, in the autonomous driving assistance program, at step (hereinafter, abbreviated as S) 1, the CPU 51 obtains a route along which the vehicle plans to travel in the future (hereinafter, referred to as planned travel route). Note that for the planned travel route for the vehicle, when a guidance route is set on the navigation device 1, a route from a current location of the vehicle to a destination in the guidance route currently set on the navigation device 1 is a planned travel route. On the other hand, when a guidance route is not set on the navigation device 1, a route along which the vehicle travels along a road from a current location of the vehicle may be a planned travel route.

In addition, the guidance route is a recommended route from a point of departure to a destination that is set by the navigation device 1, and in the present embodiment, particularly, the guidance route is searched by the server device 4. When a recommended route is searched, first, the CPU 51 transmits a route search request to the server device 4. Note that the route search request includes a terminal ID that identifies the navigation device 1 which is a sender of the route search request; and information that identifies a point of departure (e.g., a current location of the vehicle) and a destination. Note that upon performing re-searching, information that identifies a destination is not necessarily needed. Thereafter, the CPU 51 receives searched-route information transmitted from the server device 4 in response to the route search request. The searched-route information is information that identifies a recommended route (center route) from the point of departure to the destination (e.g., a series of links included in the recommended route) which is searched by the server device 4 based on the transmitted route search request and using the latest version of map information. For example, the search is performed using the publicly known Dijkstra's algorithm. Then, the CPU 51 sets the received recommended route as a guidance route for the navigation device 1.

Then, at S2, the CPU 51 obtains high-precision map information 15, targeting a section within a predetermined distance along the planned travel route which is obtained at the above-described S1 from the current location of the vehicle. For example, the predetermined distance is 3 km, but the distance can be changed as appropriate and may be 1 km or 10 km. In addition, high-precision map information 15 may be obtained targeting the entire planned travel route.

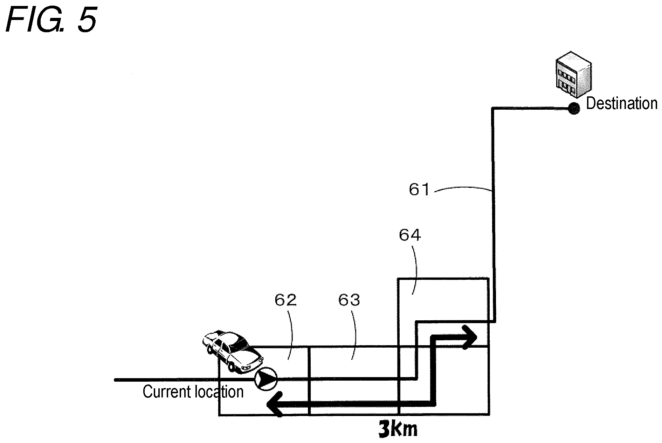

Here, the high-precision map information 15 is stored in the high-precision map DB 13 of the server device 4 so as to be sectioned in rectangular shape (e.g., 500 m × 1 km) as shown in FIG. 5. Thus, when, for example, a planned travel route 61 is obtained as shown in FIG. 5, high-precision map information 15 is obtained targeting areas 62 to 64 that include a section within 3 km along the planned travel route 61 from a current location of the vehicle. The high-precision map information 15 includes, for example, information about the lane configurations of roads and section lines (roadway centerlines, lane boundary lines, roadway outer lines, guidelines, etc.) painted on the roads. In addition to such information, there are also included, for example, information about intersection configurations and information about parking lots.

In addition, although the high-precision map information 15 is basically obtained from the server device 4, when there is high-precision map information 15 for areas that is already stored in the cache 46, the high-precision map information 15 is obtained from the cache 46. In addition, the high-precision map information 15 obtained from the server device 4 is temporarily stored in the cache 46.

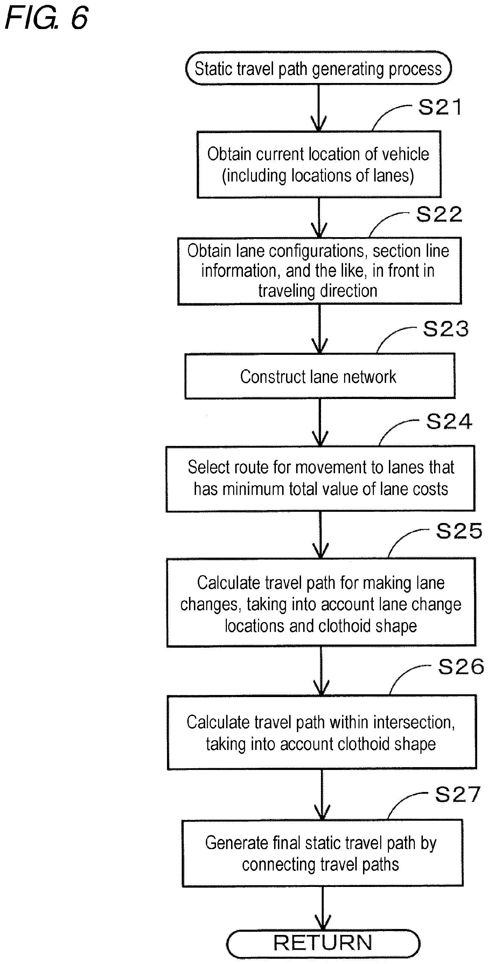

Thereafter, at S3, the CPU 51 performs a static travel path generating process which will be described later (FIG. 6). Here, the static travel path generating process is a process of generating, based on the planned travel route for the vehicle and the high-precision map information 15 obtained at the above-described S2, a static travel path which is a travel path along which the vehicle is recommended to travel on a road included in the planned travel route. Particularly, the CPU 51 identifies, on a lane-by-lane basis, a travel path along which the vehicle is recommended to travel, as a static travel path, the lanes being included in the planned travel route. Note that as will be described later, a static travel path is generated targeting a section from a current location of the vehicle to a location a predetermined distance (e.g., 3 km) ahead in a traveling direction. Note that the predetermined distance can be changed as appropriate, and a static travel path is generated targeting a region including at least outside an area (detection area) in which road conditions around the vehicle can be detected by the exterior camera 39 or other sensors. For example, a static travel path may be generated targeting the entire planned travel route to the destination.

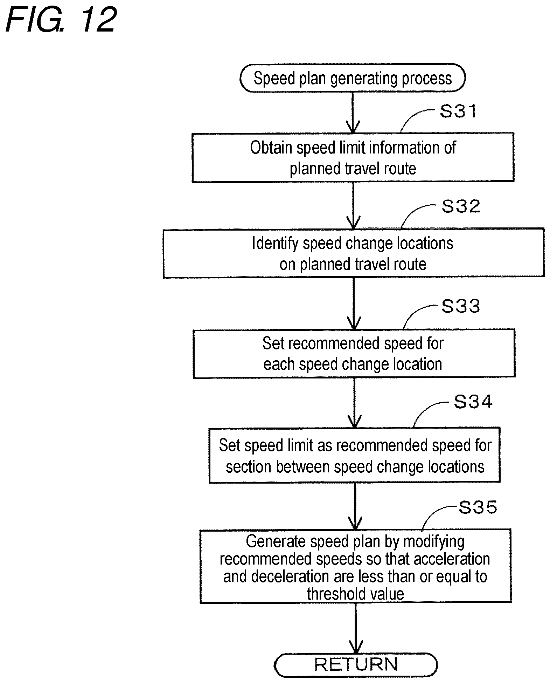

Then, at S4, the CPU 51 performs a speed plan generating process which will be described later (FIG. 12). Here, the speed plan generating process is a process of generating a speed plan for the vehicle which is used upon traveling along the static travel path generated at the above-described S3, based on the high-precision map information 15 obtained at the above-described S2.

Subsequently, at S5, the CPU 51 determines, as surrounding road conditions, particularly, whether a factor that affects travel of the vehicle is present around the vehicle, by performing image processing on a captured image having been captured by the exterior camera 39. Here, the "factor that affects travel of the vehicle" which is to be determined at the above-described S5 is a dynamic factor that changes in real time, and static factors based on road structures are excluded. For example, the factor that affects travel of the vehicle corresponds to another vehicle that travels or is parked in front of the vehicle in a traveling direction, a pedestrian located in front of the vehicle in the traveling direction, a construction section present in front of the vehicle in the traveling direction, etc. On the other hand, intersections, curves, railroad crossings, merge sections, lane reduction sections, etc., are excluded. In addition, even when there is another vehicle, a pedestrian, or a construction section, if there is no possibility of them overlapping a future travel path of the vehicle (e.g., if they are located away from the future travel path of the vehicle), then they are excluded from the "factor that affects travel of the vehicle". In addition, for means for detecting a factor that may affect travel of the vehicle, a sensor such as a millimeter-wave radar or a laser sensor, vehicle-to-vehicle communication, or road-side-device-to-vehicle communication may be used instead of a camera.

Then, if it is determined that a factor that affects travel of the vehicle is present around the vehicle (S5: YES), then processing transitions to S6. On the other hand, if it is determined that a factor that affects travel of the vehicle is not present around the vehicle (S5: NO), then processing transitions to S9.

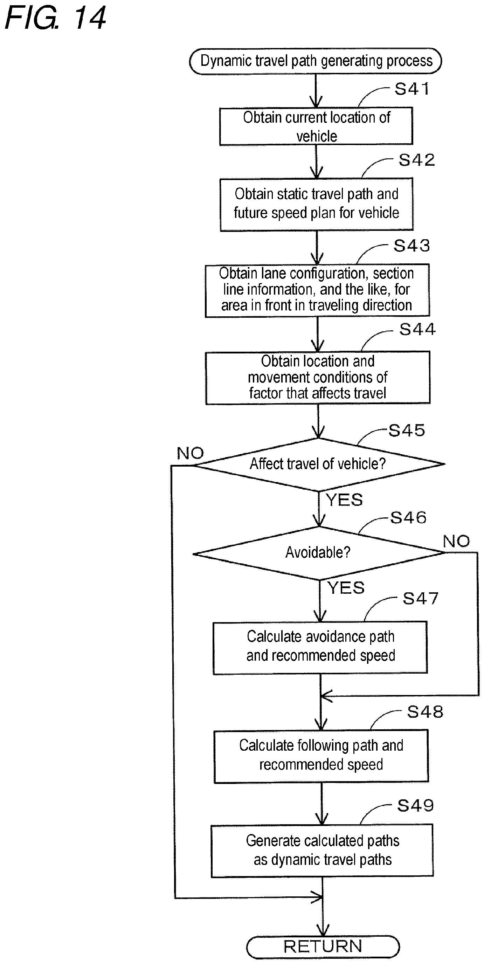

At S6, the CPU 51 performs a dynamic travel path generating process which will be described later (FIG. 14). Here, in the dynamic travel path generating process, a new path for returning to the static travel path from a current location of the vehicle, avoiding or following the "factor that affects travel of the vehicle" which is detected at the above-described S5 is generated as a dynamic travel path. Note that the dynamic travel path is, as will be described later, generated targeting a section including the "factor that affects travel of the vehicle". Note also that the length of the section varies depending on what the factor is. For example, when the "factor that affects travel of the vehicle" is another vehicle traveling in front of the vehicle (vehicle in front), as an example, a path where the vehicle makes a lane change to the right to pass the vehicle in front and then makes a lane change to the left to return to an original lane is generated as a dynamic travel path. Note that since a dynamic travel path is generated based on road conditions around the vehicle which are obtained by the exterior camera 39 or other sensors, a region in which a dynamic travel path is to be generated is at least within an area (detection area) in which road conditions around the vehicle can be detected by the exterior camera 39 or other sensors. Furthermore, in the present embodiment, since a distance from the vehicle to an object (another vehicle, etc.) present around the vehicle is obtained as one of road conditions around the vehicle, a region in which a dynamic travel path is to be generated is an area in which the distance from the vehicle to the object present around the vehicle can be obtained.

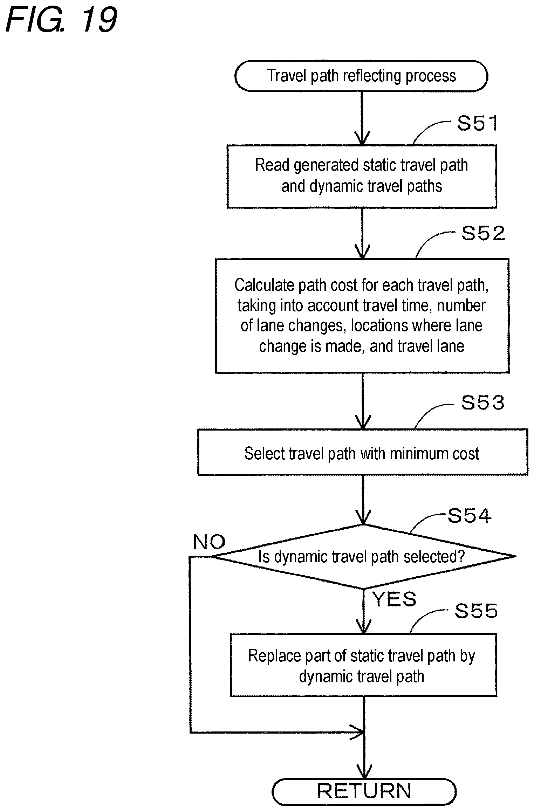

Subsequently, at S7, the CPU 51 performs a travel path reflecting process which will be described later (FIG. 19). Here, the travel path reflecting process is a process of reflecting the dynamic travel path which is newly generated at the above-described S6 in the static travel path generated at the above-described S3. Specifically, a cost for each of the static travel path and at least one dynamic travel path is calculated for an area from a current location of the vehicle to the end of a section including the "factor that affects travel of the vehicle", and a travel path with a minimum cost is selected. Consequently, a part of the static travel path is replaced by the dynamic travel path as necessary. Note that depending on the situation, replacement by the dynamic travel path may not be performed, i.e., even when the dynamic travel path is reflected, there may be no change in the static travel path generated at the above-described S3. Furthermore, when the dynamic travel path and the static travel path are identical paths, even when replacement is performed, there may be no change in the static travel path generated at the above-described S3.

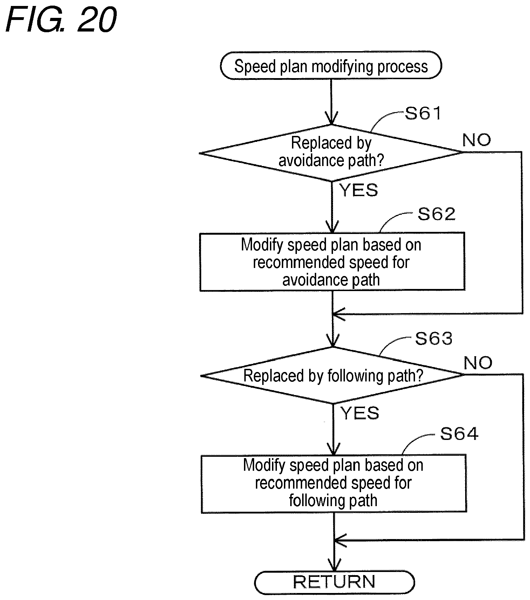

Then, at S8, the CPU 51 performs a speed plan modifying process which will be described later (FIG. 20). Here, the speed plan modifying process is a process of modifying, for the static travel path obtained after reflecting the dynamic travel path at the above-described S7, the speed plan for the vehicle generated at the above-described S4, based on information on the reflected dynamic travel path. Note that when there is no change in the static travel path generated at the above-described S3 as a result of reflecting the dynamic travel path, the process at S8 may be omitted.

Subsequently, at S9, the CPU 51 computes the amounts of control for allowing the vehicle to travel along the static travel path generated at the above-described S3 (when the dynamic travel path is reflected at the above-described S7, a path obtained after the reflection) at a speed in accordance with the speed plan generated at the above-described S4 (when the speed plan is modified at the above-described S8, a plan obtained after the modification). Specifically, each of the amounts of control for an accelerator, a brake, a gear, and steering is computed. Note that the processes at S9 and S10 may be performed by the vehicle control ECU 40 that controls the vehicle, instead of the navigation device 1.

Thereafter, at S10, the CPU 51 reflects the amounts of control computed at S9. Specifically, the computed amounts of control are transmitted to the vehicle control ECU 40 through the CAN. The vehicle control ECU 40 performs vehicle control of each of the accelerator, brake, gear, and steering based on the received amounts of control. As a result, it becomes possible to perform travel assistance control for traveling along the static travel path generated at the above-described S3 (when the dynamic travel path is reflected at the above-described S7, a path obtained after the reflection) at a speed in accordance with the speed plan generated at the above-described S4 (when the speed plan is modified at the above-described S8, a plan obtained after the modification).

Then, at S11, the CPU 51 determines whether the vehicle has traveled a certain distance since the generation of a static travel path at the above-described S3. For example, the certain distance is 1 km.

Then, if it is determined that the vehicle has traveled a certain distance since the generation of a static travel path at the above-described S3 (S11: YES), then processing returns to S1. Thereafter, generation of a static travel path is performed again, targeting a section from a current location of the vehicle to a location a predetermined distance (e.g., 3 km) ahead in a traveling direction (S1 to S4). Note that although, in the present embodiment, every time the vehicle travels a certain distance (e.g., 1 km), a static travel path is repeatedly generated targeting a section from a current location of the vehicle to a location a predetermined distance (e.g., 3 km) ahead in a traveling direction, when a distance to a destination is short, static travel paths to the destination may be generated at a time at the time of starting traveling.

On the other hand, if it is determined that the vehicle has not traveled a certain distance since the generation of a static travel path at the above-described S3 (S11: NO), then it is determined whether to terminate the assistance travel by autonomous driving assistance (S12). A case of terminating the assistance travel by autonomous driving assistance is not only a case in which the vehicle has reached the destination, but also a case in which the travel by autonomous driving assistance is intentionally canceled (override) by, for example, the user operating an operation panel provided on the vehicle or performing a steering wheel operation or a brake operation.

Then, if it is determined to terminate the assistance travel by autonomous driving assistance (S12: YES), then the autonomous driving assistance program is terminated. On the other hand, if it is determined to continue the assistance travel by autonomous driving assistance (S12: NO), then processing returns to S5.

Next, subprocesses in the static travel path generating process performed at the above-described S3 will be described based on FIG. 6. FIG. 6 is a flowchart of a subprocess program of the static travel path generating process.

First, at S21, the CPU 51 obtains a current location of the vehicle detected by the current location detecting part 31. Note that it is desirable that the current location of the vehicle be specifically identified using, for example, highly accurate GPS information or a highly accurate location technique. Here, the highly accurate location technique is a technique in which white lines and road surface painting information captured by a camera installed on the vehicle are detected by image recognition, and furthermore, the detected white lines and road surface painting information are checked against, for example, the high-precision map information 15, by which a travel lane and a highly accurate vehicle location can be detected. Furthermore, when the vehicle travels on a road including a plurality of lanes, a lane in which the vehicle travels is also identified.

Then, at S22, the CPU 51 obtains, based on the high-precision map information 15 obtained at the above-described S2, lane configurations, section line information, intersection configurations, etc., targeting a section in front of the vehicle in a traveling direction in which a static travel path is to be generated (e.g., a section within 3 km along the planned travel route from a current location of the vehicle). Note that the lane configurations and section line information obtained at the above-described S22 include, for example, the number of lanes, information identifying, when there is an increase or decrease in the number of lanes, how the number of lanes increases or decreases at which location, information identifying, when there are a plurality of lanes, which lane corresponds to which traveling direction at a next divergence point, and information identifying guidelines (white guidelines) within intersections.

Subsequently, at S23, the CPU 51 constructs a lane network, targeting the section in front of the vehicle in the traveling direction in which a static travel path is to be generated, based on the lane configurations and section line information obtained at the above-described S22. Here, the lane network is a network indicating movement to lanes that can be selected by the vehicle.

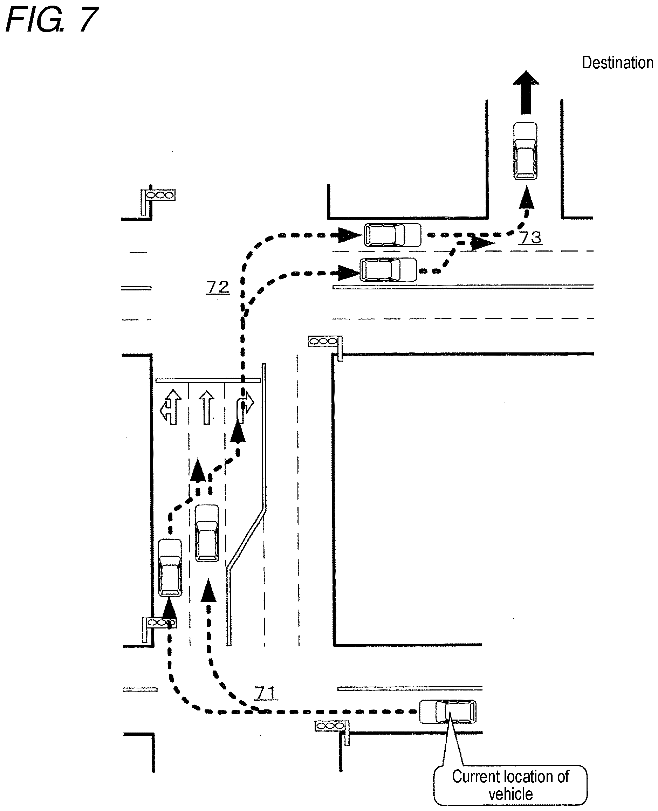

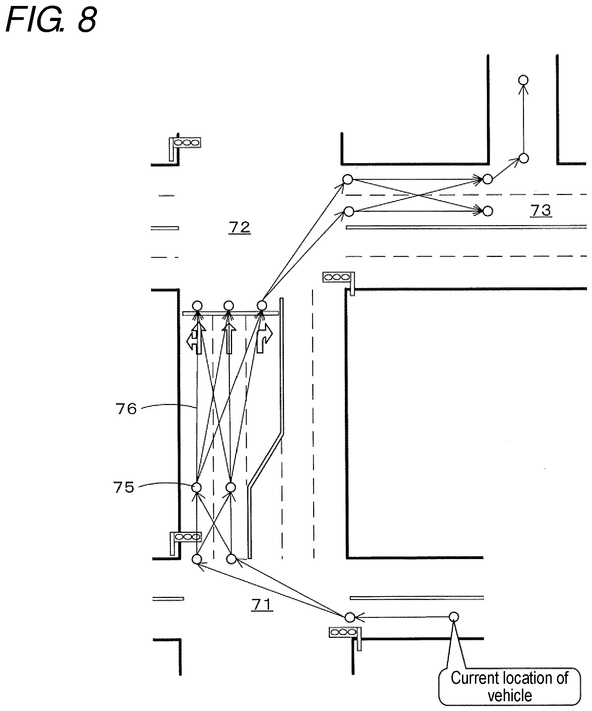

Here, as an example of constructing a lane network at the above-described S23, for example, an example case will be described in which the vehicle travels along a planned travel route shown in FIG. 7. The planned travel route shown in FIG. 7 is a route where after the vehicle travels straight ahead from its current location, the vehicle turns right at a next intersection 71, and further turns right at a next intersection 72, too, and turns left at a next intersection 73. In the planned travel route shown in FIG. 7, for example, when the vehicle turns right at the intersection 71, the vehicle can enter a right lane and can also enter a left lane. Note, however, that since the vehicle needs to turn right at the next intersection 72, at the time of entering the intersection 72, the vehicle needs to move to the farthest right lane. In addition, when the vehicle turns right at the intersection 72, too, the vehicle can enter a right lane and can also enter a left lane. Note, however, that since the vehicle needs to turn left at the next intersection 73, at the time of entering the intersection 73, the vehicle needs to move to the farthest left lane. A lane network that is constructed targeting a section in which such movement to lanes can be performed is shown in FIG. 8.

As shown in FIG. 8, the lane network divides a section in front of the vehicle in a traveling direction in which a static travel path is to be generated into a plurality of segments (groups). Specifically, the division is performed with a location where the vehicle enters an intersection, a location where the vehicle exits the intersection, and a location where the number of lanes increases or decreases being boundaries. A node point (hereinafter, referred to as lane node) 75 is set for each lane located at a boundary of each of the divided segments. Furthermore, a link 76 that connects lane nodes 75 (hereinafter, referred to as lane link) is set.

Thereafter, at S24, the CPU 51 searches for a route with the minimum total of lane costs among routes that continuously connect a starting point to an end point of a section in which a static travel path is to be generated, by referring to the lane network constructed at the above-described S23. For example, the search is performed using the publicly known Dijkstra's algorithm. Here, a lane cost is provided for each lane link 76, and the length of the lane link 76 serves as a reference value. Note that lane links 76 in the same segment (group) are considered to have the same length. Note also that the length of a lane link 76 within an intersection is considered to be 0 or a fixed value.

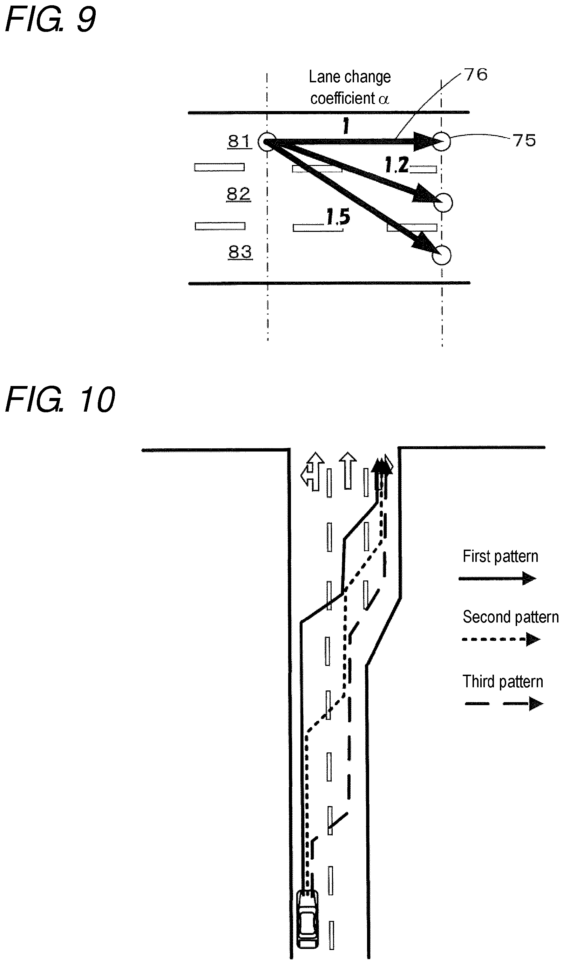

Furthermore, for a lane cost, a reference value is multiplied by a lane change coefficient $\alpha$ determined based on the number of required lane changes. Here, as shown in FIG. 9, a lane link 76 having a larger number of required lane changes has a larger value of the lane change coefficient. For example, for a lane link 76 that moves from a lane 81 to a lane 82, one lane change is required, and thus, the reference value is multiplied by 1.2 which is the lane change coefficient $\alpha$. In addition, for a lane link 76 that moves from the lane 81 to a lane 83, two consecutive lane changes are required, and thus, the reference value is multiplied by a larger value "1.5" which is the lane change coefficient $\alpha$. On the other hand, for a lane link 76 that maintains the lane 81, since a lane change is not required, multiplication by the lane change coefficient $\alpha$ is not performed. As a result, a lane link having a larger number of lane changes is given a higher lane cost, and is less likely to be selected as a route. In addition, a lane link where lane changes are consecutively made is given a higher lane cost, and is less likely to be selected as a route.

Then, the route with the minimum total of lane costs which is selected at the above-described S24 is determined to be a route for movement to lanes which is recommended when the vehicle travels along the planned travel route.

Then, at S25, the CPU 51 calculates a recommended travel path targeting, particularly, a segment (group) where lane changes are made, for when the vehicle moves to lanes in accordance with the route for movement to lanes which is selected at the above-described S24. Note that when the route for movement to lanes selected at the above-described S24 is a route where no lane changes are made, the process at S25 may be omitted.

Here, upon calculating, at the above-described S25, a travel path recommended upon making lane changes, first, locations where lane changes are made are identified. A location where a lane change is made is determined to be, for example, a location having the smallest total value of costs calculated based on the following conditions (A) to (C). Note that for a segment (group) where a plurality of lane changes are made, locations for the plurality of lane changes are determined.

(A) A cost is added for a longer travel distance of a passing lane.
(B) When a plurality of lane changes are made, a cost is added for a shorter interval between the lane changes.
(C) When a lane change is made within a predetermined distance before an intersection (e.g., 700 m for general roads and 2 km for expressways), a cost is added.

For example, in FIG. 10, an example case will be described of determining locations where lane changes are made, targeting a segment (group) set with a route for movement to lanes in which two lane changes are made from the farthest left lane. In the example shown in FIG. 10, as locations where lane changes are made, there are considered, as candidates, a first pattern in which the vehicle continues to travel in a current travel lane as long as possible, and makes two lane changes near an intersection; a second pattern in which the vehicle makes two lane changes at substantially equal intervals before reaching the intersection; and a third pattern in which the vehicle makes lane changes at the earliest possible timing. Here, in the first pattern, the lane changes are consecutively made at short intervals and near the intersection, and thus, a high cost is calculated. In addition, in the third pattern, the travel distance of a right passing lane is long, and thus, likewise, a high cost is calculated. On the other hand, in the second pattern, the lane changes are not made at short intervals or near the intersection and the travel distance of the right passing lane is relatively short, and thus, a low cost is calculated compared to the other patterns. Thus, in the example shown in FIG. 10, the second pattern is selected as locations where lane changes are made.

Then, when locations where lane changes are made are determined by the above-described process, the CPU 51 thereafter calculates a specific travel path. For example, lateral acceleration (lateral G) occurring when the vehicle makes a lane change is calculated from vehicle speed (a speed limit of a corresponding road) and lane width, and on conditions that the lateral G does not interfere with autonomous driving assistance and does not exceed an upper limit value (e.g., 0.2 G) at which a passenger of the vehicle is not given discomfort, a path that is as smooth as possible and that has the shortest possible distance required for a lane change is calculated using a clothoid curve. Note that the clothoid curve is a curve formed by a vehicle's trajectory when the vehicle travels at constant travel speed and the steering is turned at constant angular speed.

Then, at S26, the CPU 51 calculates a recommended travel path targeting, particularly, a segment (group) within an intersection, for when the vehicle moves to lanes in accordance with the route for movement to lanes which is selected at the above-described S24. Note that when the route for movement to lanes selected at the above-described S24 is a route that does not pass through any intersection, the process at S26 may be omitted.

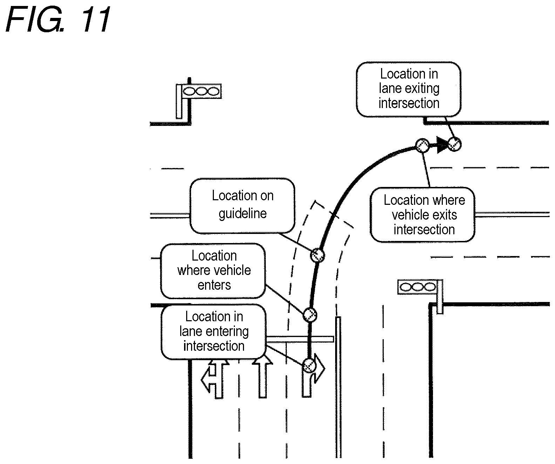

For example, in FIG. 11, an example case will be described of calculating a travel path targeting a segment (group) within an intersection that is set with a route for movement to lanes in which the vehicle enters the intersection from the farthest right lane and thereafter exits to the farthest left lane. First, the CPU 51 marks locations through which the vehicle is to pass within the intersection. Specifically, each of a location in a lane entering the intersection, a location where the vehicle enters the intersection, a location on a guideline within the intersection (only when there is a guideline), a location where the vehicle exits the intersection, and a lane exiting the intersection is marked. Then, a curve that passes through all of the marked marks is calculated as a travel path. More specifically, the marks are connected by a spline curve and then a clothoid curve that approximates the connected curve is calculated as a travel path. Note that the clothoid curve is a curve formed by a vehicle's trajectory when the vehicle travels at constant travel speed and the steering is turned at constant angular speed.

Thereafter, at S27, the CPU 51 connects the travel paths calculated at the above-described S25 and S26, and thereby generates a static travel path which is a travel path along which the vehicle is recommended to travel on a road included in the planned travel route. Note that for a segment that is neither a segment in which lane changes are made nor a segment within an intersection, a path that passes through the center of a lane is a travel path along which the vehicle is recommended to travel. The generated static travel path is a travel path along which the vehicle is recommended to travel and which is identified on a lane-by-lane basis, the lanes being included in the planned travel route.

In addition, for a section in front of the vehicle in a traveling direction in which a static travel path is to be generated, as described above, a very long section is set (e.g., a section within 3 km along the planned travel route from a current location of the vehicle or the entire section to the destination), and thus, it is assumed that a section including at least the first and second course change locations from the current location of the vehicle among course change locations which are locations where a course of the vehicle changes when the vehicle travels along the planned travel route is a section in which a static travel path is to be generated. Particularly, in a case of traveling in an urban area, it is assumed that a section including multiple course change locations from a current location of the vehicle is a section in which a static travel path is to be generated. Here, the "course change location" is an intersection where the vehicle is to make a left or right turn, or a location where the vehicle makes a lane change, and for example, even when the course change location is an intersection, if the intersection is an intersection where the vehicle travels straight ahead, the intersection is excluded. Likewise, even when the course change location is a location where the vehicle performs cornering, e.g., a curved road, if the location is a location where the vehicle travels along a road, the location is excluded. For example, in the example shown in FIG. 7, the intersection 71 where the vehicle makes a right turn is the first course change location from the current location of the vehicle, a location where the vehicle makes a lane change thereafter before the intersection 72 where the vehicle makes a right turn likewise is the second course change location from the current location, and the intersection 72 is the third course change location from the current location of the vehicle.

Then, the static travel path generated at the above-described S27 is stored as assistance information used for autonomous driving assistance, in the flash memory 54, etc.

Next, subprocesses in the speed plan generating process performed at the above-described S4 will be described based on FIG. 12. FIG. 12 is a flowchart of a subprocess program of the speed plan generating process.

First, at S31, the CPU 51 obtains speed limit information about each road included in the planned travel route for the vehicle, using map information. Note that for a road whose speed limit information cannot be obtained, a speed limit is identified based on the road type. For example, the speed limit for general roads is 60 km/h and the speed limit for expressways is 100 km/h. Note that speed limit information may be obtained from high-precision map information or may be obtained from normal map information used for a route search.

Then, at S32, the CPU 51 identifies a speed change location which is a location where vehicle speed changes on the planned travel route. Here, the speed change location corresponds, for example, to an intersection, a curve, a railroad crossing, or a crosswalk. When there are a plurality of speed change locations on the planned travel route, the plurality of speed change locations are identified.

Subsequently, at S33, the CPU 51 sets, for each speed change location identified at the above-described S32, a recommended speed at which the vehicle passes through the speed change location. For example, for an intersection having a railroad crossing or a stop line, a mode in which first, the vehicle stops (0 km/h) and then passes through the intersection at low speed (e.g., 10 km/h) is set as a recommended speed. In addition, for an intersection having a curve or where a left or right turn is to be made, a speed at which lateral acceleration (lateral G) occurring in the vehicle does not interfere with autonomous driving assistance and which does not exceed an upper limit value (e.g., 0.2 G) at which a passenger of the vehicle is not given discomfort is set as a recommended speed. For example, calculation is performed based on the curvature of a curve, an intersection configuration, etc.

Then, at S34, for a section that does not correspond to the speed change locations identified at the above-described S32 (a section between the speed change locations), the CPU 51 sets, based on the speed limit information obtained at the above-described S31, a speed limit set for a road in the section, as a recommended speed for the vehicle that travels on the section. Note, however, that for a road with a narrow road width, a road with low visibility, a road with heavy traffic, a road with a high accident rate, etc., a lower speed than a speed limit may be set as a recommended speed.

Thereafter, at S35, the CPU 51 combines together the recommended speeds for the speed change locations set at the above-described S33 and the recommended speeds for locations other than the speed change locations which are set at the above-described S34, and thereby generates, as a speed plan for the vehicle, data representing a transition in recommended speed in a traveling direction of the vehicle. In addition, upon generating a speed plan, the speed plan is modified as appropriate so that a speed change between speed change locations satisfies a predetermined condition, more specifically, so as to satisfy a condition that each of acceleration and deceleration of the vehicle traveling along the static travel path is less than or equal to a threshold value.

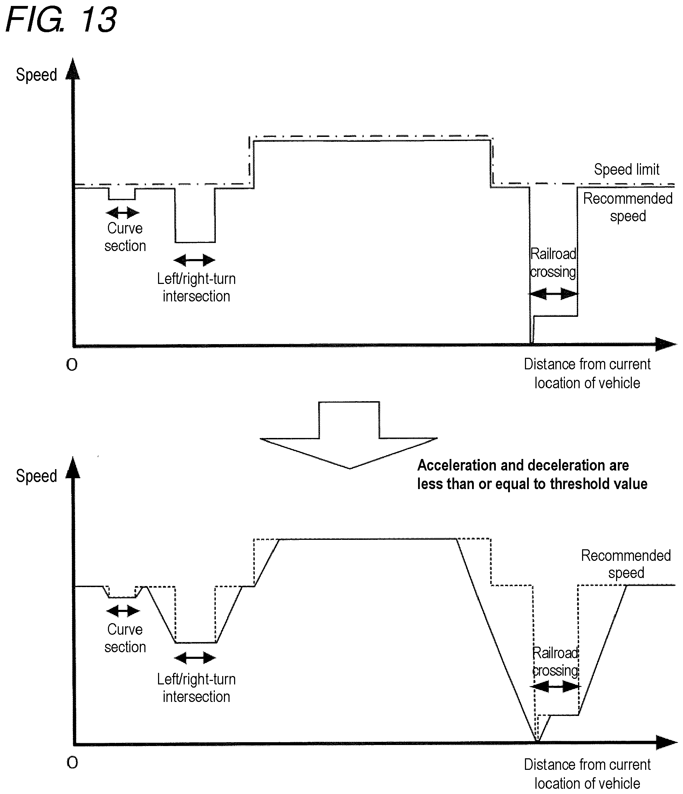

Here, FIG. 13 is a diagram showing an example of a speed plan for the vehicle generated at the above-described S35. As shown in FIG. 13, in the speed plan, recommended speeds other than those for speed change locations are basically speed limits set for roads. On the other hand, for speed change locations such as a curve and an intersection, lower speeds than speed limits are set as recommended speeds. Furthermore, the recommended speeds are modified so as to satisfy a condition that each of acceleration and deceleration of the vehicle traveling along a static travel path is less than or equal to a threshold value. Note, however, that the recommended speeds are basically modified only in a lowering direction and are modified so as not to be lowered as much as possible in a range in which the condition is satisfied. In addition, the threshold value of acceleration and deceleration is an upper limit value of acceleration and deceleration at which travel of the vehicle and autonomous driving assistance are not interfered and a passenger of the vehicle is not given discomfort. The acceleration and deceleration may have different threshold values. As a result, the recommended speeds are modified as shown in FIG. 13, generating a speed plan.

Then, the speed plan generated at the above-described S35 is stored as assistance information used for autonomous driving assistance, in the flash memory 54, etc. In addition, an acceleration plan indicating acceleration of the vehicle that is required to implement the speed plan generated at the above-described S35 may also be generated as assistance information used for autonomous driving assistance

Next, subprocesses in the dynamic travel path generating process performed at the above-described S6 will be described based on FIG. 14. FIG. 14 is a flowchart of a subprocess program of the dynamic travel path generating process.

First, at S41, the CPU 51 obtains a current location of the vehicle detected by the current location detecting part 31. Note that it is desirable that the current location of the vehicle be specifically identified using, for example, highly accurate GPS information or a highly accurate location technique. Here, the highly accurate location technique is a technique in which white lines and road surface painting information captured by a camera installed on the vehicle are detected by image recognition, and furthermore, the detected white lines and road surface painting information are checked against, for example, the high-precision map information 15, by which a travel lane and a highly accurate vehicle location can be detected. Furthermore, when the vehicle travels on a road including a plurality of lanes, a lane in which the vehicle travels is also identified.

Then, at S42, the CPU 51 obtains the static travel path (i.e., a path along which the vehicle plans to travel in the future) generated at the above-described S3 and the speed plan (i.e., a future planned speed of the vehicle) generated at the above-described S4.

Then, at S43, the CPU 51 obtains, based on the high-precision map information 15 obtained at the above-described S2, a lane configuration, section line information, etc., targeting an area in front of the vehicle in a traveling direction, particularly, an area around the "factor that affects travel of the vehicle (hereinafter, referred to as affecting factor)" detected at the above-described S5. Note that the lane configuration and section line information obtained at the above-described S43 include, for example, the number of lanes and information identifying, when there is an increase or decrease in the number of lanes, how the number of lanes increases or decreases at which location.

Subsequently, at S44, the CPU 51 obtains, for the affecting factor detected at the above-described S5, a location of the affecting factor (a distance from the vehicle to the affecting factor) at the present time and movement conditions (a moving direction and a moving speed) when the affecting factor is moving. Note that the location and movement conditions of the affecting factor are obtained by, for example, performing image processing, etc., on a captured image obtained by the exterior camera 39 capturing a predetermined detection area around the vehicle.

Thereafter, at S45, the CPU 51 first predicts a future moving trajectory of the affecting factor, based on the current location and movement conditions of the affecting factor obtained at the above-described S44. Note that when the affecting factor is another vehicle, the prediction may be made taking into account the turn-on/off states of turn signals and brake lights of another vehicle. Furthermore, if the future travel path and speed plan for another vehicle can be obtained by vehicle-to-vehicle communication, etc., then the prediction may be made taking into account them. Thereafter, based on the predicted future moving trajectory of the affecting factor and the static travel path and speed plan for the vehicle obtained at the above-described S42, it is more accurately determined whether the affecting factor affects travel of the vehicle. Specifically, when it is predicted that the vehicle and the affecting factor are located in the same lane at the present time or in the future and a distance therebetween reaches within an appropriate vehicle-to-vehicle distance D, it is determined that the affecting factor affects travel of the vehicle. Note that the appropriate vehicle-to-vehicle distance D is calculated by, for example, the following equation (1):

$$D = \text{vehicle speed of the vehicle} \times 2 \text{ seconds} + \text{vehicle's braking distance} - \text{affecting factor's braking distance (note, however, that this equation only applies to a case in which the affecting factor is a moving object) ... (1)}$$

Then, if it is determined that the affecting factor affects travel of the vehicle (S45: YES), then processing transitions to S46. On the other hand, if it is determined that the affecting factor does not affect travel of the vehicle (S45: NO), then processing transitions to S9 (S7 and S8 are omitted) without generating a dynamic travel path.

At S46, the CPU 51 determines whether a new path for the vehicle to return to the static travel path, avoiding the affecting factor (i.e., to pass the affecting factor) can be generated. Specifically, when the affecting factor and the vehicle are located in the same lane at the present time, for a path where the vehicle changes lanes to the right to pass the affecting factor in a range in which vehicle speed does not exceed a speed limit, and then changes lanes to the left to return to an original lane, if the path can be formed that maintains an appropriate vehicle-to-vehicle distance D or more with the affecting factor, then it is determined that a new path for the vehicle to return to the static travel path, avoiding the affecting factor can be generated. In addition, when the affecting factor and the vehicle are located in different lanes at the present time and thereafter move to the same lane, for a path where the vehicle passes the affecting factor in a range in which vehicle speed does not exceed a speed limit, and then makes a lane change to the same lane as the affecting factor, if the path can be formed that maintains an appropriate vehicle-to-vehicle distance D or more with the affecting factor, then it is determined that a new path for the vehicle to return to the static travel path, avoiding the affecting factor can be generated. The determination process at the above-described S46 is determined based on the lane configuration and section line information for an area in front of the vehicle in the traveling direction which are obtained at the above-described S43, the current location of the vehicle, the future moving trajectory of the affecting factor, and a speed limit of a road.

Then, if it is determined that a new path for the vehicle to return to the static travel path, avoiding the affecting factor (i.e., to pass the affecting factor) can be generated (S46: YES), then processing transitions to S47. On the other hand, if it is determined that a new path for the vehicle to return to the static travel path, avoiding the affecting factor (i.e., to pass the affecting factor) cannot be generated (S46: NO), then processing transitions to S48.

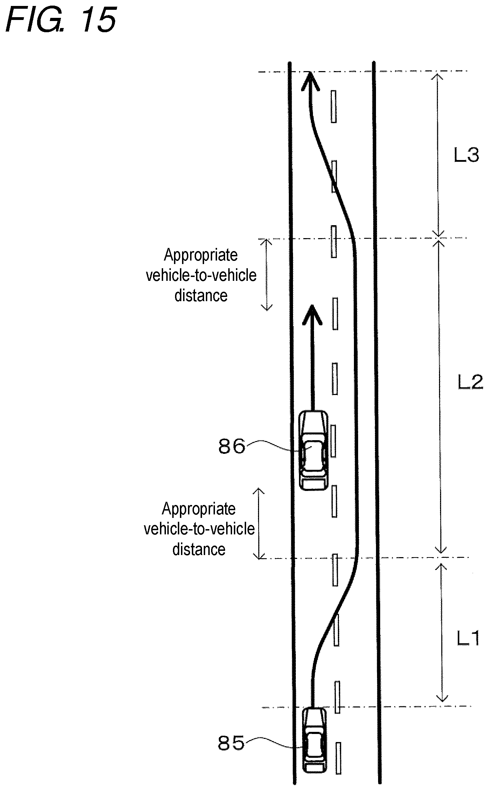

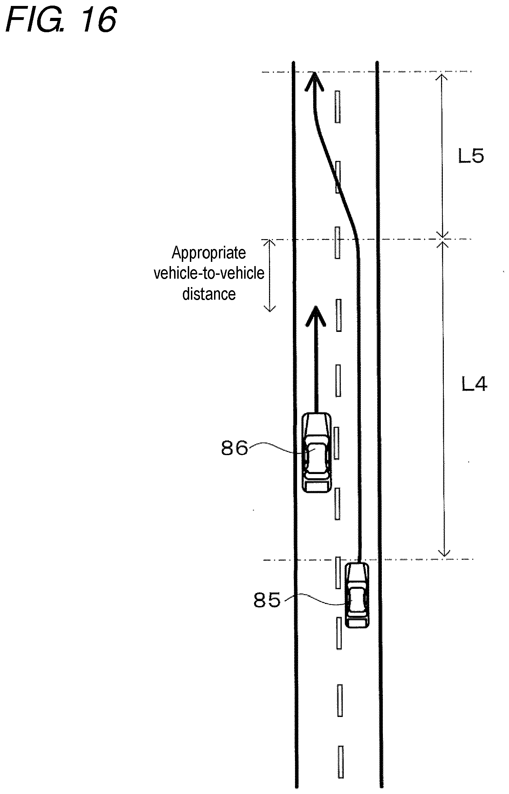

At S47, the CPU 51 calculates a path for the vehicle to return to the static travel path, avoiding the affecting factor (i.e., to pass the affecting factor) (hereinafter, referred to as avoidance path). Specifically, when the vehicle and the affecting factor are present in the same lane at the present time, a path where, as shown in FIG. 15, the vehicle makes a lane change to the right to pass the affecting factor and then makes a lane change to the left to return to an original lane corresponds to an avoidance path. On the other hand, when the vehicle and the affecting factor are present in different lanes at the present time and thereafter the vehicle needs to move to the same lane as the affecting factor, a path where, as shown in FIG. 16, the vehicle passes the affecting factor and then makes a lane change to move to the same lane as the affecting factor corresponds to an avoidance path.

Here, FIG. 15 shows an example of an avoidance path generated at the above-described S47 when a vehicle 85 travels in a left lane on a four-lane road and an affecting factor is a vehicle in front 86 that travels in the same lane as the vehicle 85.

First, in the example shown in FIG. 15, a first path L1 is calculated that is required for the vehicle to move to a right lane by starting a turn of the steering and for the steering position to return to a straight-ahead direction. Note that for the first path L1, lateral acceleration (lateral G) occurring when a lane change is made is calculated based on the current vehicle speed of the vehicle, and on conditions that the lateral G does not interfere with autonomous driving assistance and does not exceed an upper limit value (e.g., 0.2 G) at which a passenger of the vehicle is not given discomfort, a path that is as smooth as possible and that has the shortest possible distance required for a lane change is calculated using a clothoid curve. In addition, maintaining an appropriate vehicle-to-vehicle distance D or more with the vehicle in front 86 is also a condition.

Then, a second path L2 is calculated where the vehicle travels in the right lane with a speed limit being an upper limit to pass the vehicle in front 86 until an appropriate vehicle-to-vehicle distance D or more with the vehicle in front 86 is obtained. Note that the second path L2 is basically a linear path, and the length of the path is calculated based on the vehicle speed of the vehicle in front 86 and the speed limit for the road.

Subsequently, a third path L3 is calculated that is required for the vehicle to return to the left lane by starting a turn of the steering and for the steering position to return to the straight-ahead direction. Note that for the third path L3, lateral acceleration (lateral G) occurring when a lane change is made is calculated based on the current vehicle speed of the vehicle, and on conditions that the lateral G does not interfere with autonomous driving assistance and does not exceed an upper limit value (e.g., 0.2 G) at which a passenger of the vehicle is not given discomfort, a path that is as smooth as possible and that has the shortest possible distance required for a lane change is calculated using a clothoid curve. In addition, maintaining an appropriate vehicle-to-vehicle distance D or more with the vehicle in front 86 is also a condition.

In addition, FIG. 16 shows an example of an avoidance path generated at the above-described S47 when the affecting factor is the vehicle in front 86 that travels in the left lane in a situation in which the vehicle 85 travels in the right lane on a four-lane road and needs to move to the left lane.

First, in the example shown in FIG. 16, a first path L4 is calculated where the vehicle travels in the right lane with a speed limit being an upper limit to pass the vehicle in front 86 until an appropriate vehicle-to-vehicle distance D or more with the vehicle in front 86 is obtained. Note that the first path L4 is basically a linear path, and the length of the path is calculated based on the vehicle speed of the vehicle in front 86 and the speed limit for the road.

Subsequently, a second path L5 is calculated that is required for the vehicle to move to the left lane by starting a turn of the steering and for the steering position to return to a straight-ahead direction. Note that for the second path L5, lateral acceleration (lateral G) occurring when a lane change is made is calculated based on the current vehicle speed of the vehicle, and on conditions that the lateral G does not interfere with autonomous driving assistance and does not exceed an upper limit value (e.g., 0.2 G) at which a passenger of the vehicle is not given discomfort, a path that is as smooth as possible and that has the shortest possible distance required for a lane change is calculated using a clothoid curve. In addition, maintaining an appropriate vehicle-to-vehicle distance D or more with the vehicle in front 86 is also a condition.

In addition, at the above-described S47, a recommended speed for the vehicle to travel along the above-described avoidance path is also calculated. For the recommended speed for the vehicle, with a speed limit being an upper limit, a speed at which lateral acceleration (lateral G) occurring in the vehicle when making a lane change does not interfere with autonomous driving assistance and which does not exceed an upper limit value (e.g., 0.2 G) at which a passenger of the vehicle is not given discomfort is set as the recommended speed. For example, the calculation is performed based on the curvature of the avoidance path, the speed limit, etc.

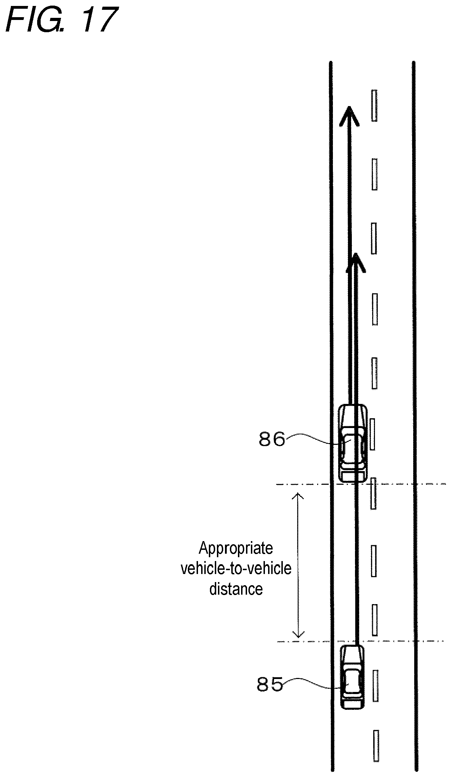

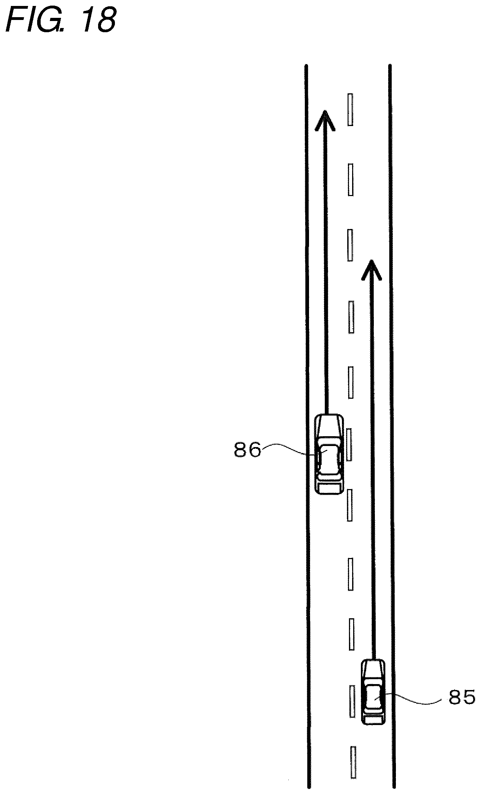

Thereafter, at S48, the CPU 51 calculates a path for the vehicle to travel following (or side by side with) the affecting factor (hereinafter, referred to as following path). Specifically, when the vehicle and the affecting factor are present in the same lane at the present time, a path where, as shown in FIG. 17, the vehicle 85 continues to travel in the current lane without making a lane change to follow the affecting factor (e.g., the vehicle in front 86) corresponds to a following path. Note that the following path is basically the same path as a static travel path. Note, however, that since the vehicle-to-vehicle distance with the affecting factor needs to be appropriately maintained, as will be described later, the speed plan is modified (S8). On the other hand, when the vehicle and the affecting factor are present in different lanes at the present time and thereafter the vehicle needs to move to the same lane as the affecting factor, a path where, as shown in FIG. 18, the vehicle 85 continues to travel in the current lane without making a lane change to travel side by side with the affecting factor (e.g., the vehicle in front 86) corresponds to a following path. Note that in this case, the following path is different from a static travel path.

In addition, at the above-described S48, a recommended speed for the vehicle to travel along the above-described following path is also calculated. For the following speed for the vehicle, with a speed limit being an upper limit, a speed at which an appropriate vehicle-to-vehicle distance D or more is maintained for the vehicle-to-vehicle distance with the affecting factor in front is set as the recommended speed. Note that the appropriate vehicle-to-vehicle distance D is calculated based on the aforementioned equation (1). Note, however, that when, as shown in FIG. 18, the vehicle and the affecting factor are located in different lanes, the vehicle-to-vehicle distance D or more does not necessarily need to be maintained, but considering the necessity for the vehicle to make a lane change to the same lane as the affecting factor thereafter, it is desirable to maintain the vehicle-to-vehicle distance D or more.

Thereafter, at S49, the CPU 51 generates the avoidance path calculated at the above-described S47 (only when the avoidance path is calculated) and the following path calculated at the above-described S48, as dynamic travel paths which are travel paths along which the vehicle is recommended to travel on a road included in the planned travel route, taking into account the surrounding road conditions.

Then, the dynamic travel paths generated at the above-described S49 are stored as assistance information used for autonomous driving assistance, in the flash memory 54, etc.

Next, subprocesses in the travel path reflecting process performed at the above-described S7 will be described based on FIG. 19. FIG. 19 is a flowchart of a subprocess program of the travel path reflecting process.

First, at S51, the CPU 51 reads the static travel path generated at the above-described S3 and the dynamic travel paths generated at the above-described S6 from a storage medium such as the flash memory 54.

Subsequently, at S52, the CPU 51 calculates, for each travel path read at the above-described S51, a path cost indicating the level of appropriateness as a travel path for the vehicle for each travel path. Here, the path cost is calculated taking into account at least one of (a) travel time (average vehicle speed), (b) the number of lane changes, (c) locations where a lane change is made, and (d) a travel lane. Specifically, the calculation is performed based on the following conditions.

For (a) "travel time (average vehicle speed)", a higher path cost is calculated for a travel path with longer travel time (i.e., a lower average vehicle speed). Note that an average vehicle speed for the static travel path is identified based on the speed plan generated at the above-described S4. On the other hand, the dynamic travel paths are identified based on the recommended speeds calculated at the above-described S47 and S48.

For (b) "the number of lane changes", a higher path cost is calculated for a travel path with a larger number of lane changes.

For (c) "locations where a lane change is made", when a plurality of lane changes are made, a higher path cost is calculated for a travel path with a shorter interval between lane changes. In addition, for a travel path where a lane change is made within a predetermined distance before an intersection (e.g., 700 m for general roads and 2 km for expressways), a path cost is added.

For (d) "a travel lane", a higher path cost is calculated for a travel path with a longer travel distance of a passing lane.

Note, however, that regardless of the above-described conditions (a) to (d), for a travel path that is determined to cause the vehicle to come into contact with the affecting factor detected at the above-described S5, the cost is infinity.

Thereafter, at S53, the CPU 51 compares the path costs for each travel path which are calculated at the above-described S52, and selects a travel path with the smallest value of the path cost as a travel path along which the vehicle is recommended to travel.

Then, at S54, the CPU 51 determines whether an avoidance path or a following path which is a dynamic travel path is selected at the above-described S53.

Then, if it is determined at the above-described S53 that an avoidance path or a following path which is a dynamic travel path is selected (S54: YES), then processing transitions to S55.

At S55, the CPU 51 consequently replaces the static travel path by the dynamic travel path, targeting a section in which the selected dynamic travel path is generated. Note that basically, when the static travel path is replaced by the dynamic travel path, the starting point and end point of the dynamic path are connected to the static travel path, but exceptionally, when the following path shown in FIG. 18 is selected, the end point of the dynamic travel path may not be connected to the static travel path. In such a case, a static travel path may be newly generated with the end point of the dynamic travel path being a starting point of the static travel path, or generation of a dynamic travel path may be repeatedly performed at regular intervals until a dynamic travel path is connected to the static travel path.

Thereafter, assistance travel by autonomous driving assistance is performed based on the static travel path, a part of which is replaced by the dynamic travel path (S9 and S10).

On the other hand, if it is determined at the above-described S53 that the static travel path is selected (S54: NO), then processing transitions to S8 without performing replacement by a dynamic travel path.

Next, subprocesses in the speed plan modifying process performed at the above-described S8 will be described based on FIG. 20. FIG. 20 is a flowchart of a subprocess program of the speed plan modifying process.

First, at S61, the CPU 51 determines whether a part of the static travel path is replaced by a dynamic travel path, particularly, an avoidance path, in the travel path reflecting process at the above-described S7 (FIG. 19). Note that the avoidance path is one of dynamic travel paths and is a path for the vehicle to return to the static travel path, avoiding the affecting factor (i.e., to pass the affecting factor), as shown in FIGS. 15 and 16.

Then, if it is determined that a part of the static travel path is replaced by an avoidance path in the travel path reflecting process at the above-described S7 (S61: YES), then processing transitions to S62. On the other hand, if it is determined that a part of the static travel path is not replaced by an avoidance path in the travel path reflecting process at the above-described S7 (S61: NO), then processing transitions to S63.

At S62, the CPU 51 modifies a portion of the speed plan generated at the above-described S4 (see FIG. 13), targeting a section replaced by the avoidance path, to the recommended speed for the vehicle to travel along the avoidance path which is calculated at the above-described S47.

Then, at S63, the CPU 51 determines whether a part of the static travel path is replaced by a dynamic travel path, particularly, a following path, in the travel path reflecting process at the above-described S7 (FIG. 19). Note that the following path is one of dynamic travel paths and is a path for the vehicle to travel following (or side by side with) the affecting factor without making a lane change, as shown in FIGS. 17 and 18.

Then, if it is determined that a part of the static travel path is replaced by a following path in the travel path reflecting process at the above-described S7 (S63: YES), then processing transitions to S64. On the other hand, if it is determined that a part of the static travel path is not replaced by a following path in the travel path reflecting process at the above-described S7 (S63: NO), then the speed plan modifying process ends and processing transitions to S9.

At S64, the CPU 51 modifies a portion of the speed plan generated at the above-described S4 (see FIG. 13), targeting a section replaced by the following path, to the recommended speed for the vehicle to travel along the following path which is calculated at the above-described S48.

Note that when it is determined in the travel path reflecting process at the above-described S7 that replacement by a dynamic travel path is not performed (S54: NO), basically, a modification to the speed plan does not need to be made. Note, however, that when an appropriate vehicle-to-vehicle distance D cannot be maintained with the affecting factor in the current speed plan, the speed plan may be modified.

As described in detail above, the navigation device 1 and a computer program executed by the navigation device 1 according to the present embodiment obtain a planned travel route along which the vehicle travels (S1), generate a static travel path which is a travel path along which the vehicle is recommended to travel on a road included in the planned travel route, using the high-precision map information 15 including at least information about section lines (S3), and provide drive assistance for the vehicle based on the static travel path (S9 and S10), and thus, when the vehicle travels by driving assistance, it becomes possible to generate a travel path for the vehicle taking into account the section lines and lane configurations of roads. Particularly, when the vehicle travels on a highway with a plurality of lanes on one side or when the vehicle travels on a special road where the number of lanes increases or decreases, it becomes possible to generate a more appropriate travel path for the vehicle compared to conventional ones. Then, by providing drive assistance based on the generated travel path, the drive assistance can be appropriately provided.

Note that the present invention is not limited to the above-described embodiment, and it is, of course, possible to make various modifications and alterations thereto without departing from the spirit and scope of the present invention.

For example, although in the present embodiment, when an affecting factor that affects travel of the vehicle is detected, each of an avoidance path and a following path is crated as a dynamic travel path, only either one of the dynamic travel paths may be generated.

In addition, although, in the present embodiment, the high-precision map information included in the server device 4 includes both of pieces of information about the lane configurations of roads (lane-by-lane road configurations, curvature, lane widths, etc.) and about section lines painted on roads (roadway centerlines, lane boundary lines, roadway outer lines, guidelines, etc.), the high-precision map information may include only the information about section lines or may include only the information about the lane configurations of roads. For example, even when only the information about section lines is included, information corresponding to the information about the lane configurations of roads can be estimated based on the information about section lines. In addition, even when only the information about the lane configurations of roads is included, information corresponding to the information about section lines can be estimated based on the information about the lane configurations of roads. In addition, the "information about section lines" may be information that identifies the types or layout of section lines themselves that mark off lanes, or may be information that identifies whether a lane change can be made between adjacent lanes, or may be information that directly or indirectly identifies lane configurations.

In addition, in the present embodiment, when an affecting factor that affects travel of the vehicle is detected, a dynamic travel path is generated and a comparison is made between path costs of an existing static travel path and the newly generated dynamic travel path (S52 and S53), and only when it is determined that the dynamic travel path is recommended over the static travel path, the static travel path is replaced by the dynamic travel path (S55), but when a dynamic travel path is generated, the static travel path may always be replaced by the dynamic travel path.

In addition, in the present embodiment, as means for reflecting a dynamic travel path in a static travel path, a part of the static travel path is replaced by the dynamic travel path (S55), but instead of replacement, the path may be modified such that the static travel path gets close to the dynamic travel path.

In addition, in the present embodiment, controlling, by the vehicle control ECU 40, of all of an accelerator operation, a brake operation, and a steering wheel operation which are operations related to the behavior of the vehicle among vehicle operations is described as autonomous driving assistance for performing autonomous travel independently of user's driving operations. However, the autonomous driving assistance may be controlling, by the vehicle control ECU 40, of at least one of an accelerator operation, a brake operation, and a steering wheel operation which are operations related to the behavior of the vehicle among vehicle operations. On the other hand, manual driving by user's driving operations is described as performing, by the user, of all of an accelerator operation, a brake operation, and a steering wheel operation which are operations related to the behavior of the vehicle among vehicle operations.

In addition, drive assistance of the present invention is not limited to autonomous driving assistance related to autonomous driving of the vehicle. For example, drive assistance is also possible that is provided by displaying a static travel path and a dynamic travel path on a navigation screen and providing guidance using voice, a screen, etc., (e.g., guidance on a lane change and guidance on a recommended vehicle speed). In addition, user's driving operations may be assisted by displaying a static travel path and a dynamic travel path on a navigation screen.

In addition, although, in the present embodiment, the configuration is such that the autonomous driving assistance program (FIG. 4) is executed by the navigation device 1, the configuration may be such that an in-vehicle device other than the navigation device 1 or the vehicle control ECU 40 executes the autonomous driving assistance program. In that case, the in-vehicle device or the vehicle control ECU 40 is configured to obtain a current location of the vehicle, map information, etc., from the navigation device 1 or the server device 4. Furthermore, the server device 4 may perform some or all of the steps of the autonomous driving assistance program (FIG. 4). In that case, the server device 4 corresponds to a drive assistance device of the present application.

In addition, the present invention can also be applied to mobile phones, smartphones, tablet terminals, personal computers, etc., (hereinafter, referred to as a portable terminal, etc.) in addition to navigation devices. In addition, the present invention can also be applied to a system including a server and a portable terminal, etc. In that case, the configuration may be such that each step of the above-described autonomous driving assistance program (see FIG. 4) is performed by either one of the server and the portable terminal, etc. Note, however, that when the present invention is applied to the portable terminal, etc., a vehicle that can provide autonomous driving assistance and the portable terminal, etc. need to be connected to each other in a communicable manner (it does not matter whether the connection is a wire or wireless connection).

In addition, although an implementation example that embodies the drive assistance device according to the present invention is described above, the drive assistance device can also have the following configurations, and in that case, the following advantageous effects are provided.

For example, a first configuration is as follows:

The drive assistance device includes planned travel route obtaining means (51) for obtaining a planned travel route along which a vehicle (5) travels; static path generating means (51) for generating a static travel path using map information (15) including at least information about section lines, the static travel path being a travel path along which a vehicle is recommended to travel on a road included in the planned travel route; and drive assistance means (51) for providing drive assistance for a vehicle based on the static travel path.

According to the drive assistance device having the above-described configuration, when the vehicle travels by drive assistance, it becomes possible to generate, based on information about section lines on roads, a travel path for the vehicle that takes into account restrictions, etc., on the roads. Particularly, even when a section in which movement of the vehicle between lanes is restricted or a region in which it is not desirable for the vehicle to travel (e.g., a guide zone) is set on a road, it becomes possible to generate a more appropriate travel path for the vehicle compared to conventional ones. Then, by providing drive assistance based on the generated travel path, the drive assistance can be appropriately provided.

In addition, a second configuration is as follows:

The drive assistance device includes planned travel route obtaining means (51) for obtaining a planned travel route along which a vehicle (5) travels; static path generating means (51) for generating, using map information (15), a static travel path for a section including at least course change locations (71, 72) that are first and second course change locations from a current location of a vehicle among course change locations, the static travel path being a travel path along which a vehicle is recommended to travel on a road included in the planned travel route, and the course change locations being locations where a course of a vehicle changes when a vehicle travels along the planned travel route; and drive assistance means (51) for providing drive assistance for a vehicle based on the static travel path.

According to the drive assistance device having the above-described configuration, when the vehicle travels by drive assistance, even when a location where a course of the vehicle changes is present in front of the vehicle in a traveling direction, it becomes possible to generate a travel path for the vehicle for a wider section including the location. Then, by providing drive assistance based on the generated travel path, the drive assistance can be appropriately provided.

In addition, a third configuration is as follows:
The course change locations (71, 72) are intersections where a vehicle (5) is to make a left or right turn, or locations where a vehicle makes a lane change.

According to the drive assistance device having the above-described configuration, when the vehicle travels by drive assistance, even when an intersection where the vehicle is to make a left or right turn or a location where the vehicle makes a lane change is present in front of the vehicle in a traveling direction, it becomes possible to generate a travel path for the vehicle for a wider section including the location. Then, by providing drive assistance based on the generated travel path, the drive assistance can be appropriately provided.

In addition, a fourth configuration is as follows:
The drive assistance device includes dynamic travel path generating means (51) for generating a dynamic travel path using the map information (15) and surrounding road conditions obtained by a vehicle (5), the dynamic travel path being a travel path along which a vehicle is recommended to travel on a road included in the planned travel route; and path reflecting means (51) for reflecting the dynamic travel path in a part of the static travel path, and the drive assistance means (51) provides drive assistance for a vehicle based on the static travel path in which the dynamic travel path is reflected.

According to the drive assistance device having the above-described configuration, particularly, when a situation occurs in which it is recommended, based on surrounding road conditions, to change a travel path for the vehicle from a static travel path, it becomes possible to modify the travel path for the vehicle as necessary by generating a dynamic travel path which is a new travel path taking into account the surrounding road conditions, and reflecting the generated dynamic travel path in the existing static travel path.

In addition, a fifth configuration is as follows:
The drive assistance device includes road conditions obtaining means (51) for obtaining road conditions of a predetermined detection area around a vehicle; planned travel route obtaining means (51) for obtaining a planned travel route along which a vehicle travels; static path generating means (51) for generating, using map information (15), a static travel path for a region including outside the detection area, the static travel path being a travel path along which a vehicle is recommended to travel on a road included in the planned travel route; dynamic travel path generating means (51) for generating a dynamic travel path for the detection area, using map information and surrounding road conditions obtained by a vehicle, the dynamic travel path being a travel path along which a vehicle is recommended to travel on a road included in the planned travel route; and drive assistance means (51) for providing drive assistance for a vehicle based on a generated travel path, the generated travel path being a travel path generated using the static travel path and the dynamic travel path.

According to the drive assistance device having the above-described configuration, a planned travel route is obtained as a future long-distance plan for the vehicle, a travel path along which the vehicle is recommended to travel is generated as a future intermediate-distance plan for the vehicle, based on map information, and for a detection area in which road conditions can be obtained, a travel path along which the vehicle is recommended to travel is generated as a future short-distance plan for the vehicle, based on the obtained road conditions in addition to map information. As a result, it becomes possible to generate an appropriate travel plan using materials that can be obtained for each distance from the vehicle. Particularly, by generating each travel path targeting a narrow region in which road conditions around the vehicle can be obtained and a wider region, it becomes possible to select an appropriate travel path based on the state of the vehicle.

In addition, a sixth configuration is as follows:
The static path generating means (51) generates the static travel path using map information including at least information about section lines.

According to the drive assistance device having the above-described configuration, when the vehicle travels by drive assistance, it becomes possible to generate, based on information about section lines on roads, a travel path for the vehicle that takes into account restrictions, etc., on the roads. Particularly, even when a section in which movement of the vehicle between lanes is restricted or a region in which it is not desirable for the vehicle to travel (e.g., a guide zone) is set on a road, it becomes possible to generate a more appropriate travel path for the vehicle compared to conventional ones. Then, by providing drive assistance based on the generated travel path, the drive assistance can be appropriately provided.

In addition, a seventh configuration is as follows:
The road conditions obtaining means obtains, as the road conditions, a distance from a vehicle to an object present around a vehicle.

According to the drive assistance device having the above-described configuration, for a detection area in which a distance from the vehicle to an object present around the vehicle can be obtained as road conditions, a travel path along which the vehicle is recommended to travel is generated based on the obtained road conditions in addition to map information. As a result, particularly, for a narrow region in which road conditions around the vehicle can be obtained, it becomes possible to generate an appropriate travel path that takes into account the object present around the vehicle.

In addition, an eighth configuration is as follows:

The drive assistance device includes path reflecting means (51) for reflecting the dynamic travel path in a part of the static travel path, and the generated travel path is the static travel path in which the dynamic travel path is reflected.

According to the drive assistance device having the above-described configuration, particularly, when a situation occurs in which it is recommended, based on surrounding road conditions, to change a travel path for the vehicle from a static travel path, a dynamic travel path which is a new travel path taking into account the surrounding road conditions is generated, and the generated dynamic travel path is reflected in the existing static travel path, by which the travel path for the vehicle can be modified as necessary.

In addition, a ninth configuration is as follows:

The dynamic travel path generating means (51) generates, when detecting that a factor that affects travel of a vehicle is present around a vehicle (5), the dynamic travel path targeting a section including the factor, and the path reflecting means (51) reflects, when the dynamic travel path is generated, the dynamic travel path in the static travel path, targeting a section in which the dynamic travel path is generated.

According to the drive assistance device having the above-described configuration, particularly, when a situation occurs in which a factor that affects travel of the vehicle is present around the vehicle and it is recommended to change a travel path for the vehicle from a static travel path, it becomes possible to modify the travel path for the vehicle as necessary by generating a dynamic travel path which is a new travel path taking into account the factor, and reflecting the generated dynamic travel path in the existing static travel path.

In addition, a tenth configuration is as follows:

The dynamic travel path is a travel path that returns to the static travel path from a current location of a vehicle, avoiding the factor, and that is generated targeting a section from a current location of a vehicle (5) to a location where the vehicle returns to the static travel path, avoiding the factor, or a travel path that follows the factor and that is generated targeting a section in which the vehicle follows the factor.

According to the drive assistance device having the above-described configuration, particularly, when a situation occurs in which a factor that affects travel of the vehicle is present around the vehicle and it is recommended to change a travel path for the vehicle from a static travel path, it becomes possible to modify the travel path for the vehicle as necessary by generating, as a dynamic travel path, a travel path for avoiding the factor or a travel path for traveling following the factor, and reflecting the generated dynamic travel path in the existing static travel path.

In addition, an eleventh configuration is as follows:

The path reflecting means (51) reflects the dynamic travel path in the static travel path by replacing a part of the static travel path by the dynamic travel path.

According to the drive assistance device having the above-described configuration, particularly, when a situation occurs in which it is recommended, based on surrounding road conditions, to change a travel path for the vehicle from a static travel path, it becomes possible to modify the travel path for the vehicle as necessary by generating a dynamic travel path which is a new travel path taking into account the surrounding road conditions, and replacing a part of the existing static travel path by the generated dynamic travel path.

In addition, a twelfth configuration is as follows:

The path reflecting means (51) determines which one of the static travel path and the dynamic travel path is recommended, taking into account at least one of travel time, the number of lane changes, locations where a lane change is made, and a travel lane, and when it is determined that the dynamic travel path is recommended, the path reflecting means (51) replaces a part of the static travel path by the dynamic travel path.

According to the drive assistance device having the above-described configuration, particularly, when a situation occurs in which it is recommended, based on surrounding road conditions, to change a travel path for the vehicle from a static travel path, it becomes possible to select a more appropriate travel path as a travel path used for drive assistance, by generating a dynamic travel path which is a new travel path taking into account the surrounding road conditions, and comparing the generated dynamic travel path with the existing static travel path.

In addition, a thirteenth configuration is as follows.

The path reflecting means (51) calculates costs for the static travel path and the dynamic travel path, taking into account at least one of travel time, the number of lane changes, locations where a lane change is made, and a travel lane, and selects one of the static travel path and the dynamic travel path that has a minimum cost, as a recommended travel path.

According to the drive assistance device having the above-described configuration, by comparing a generated dynamic travel path and an existing static travel path using costs, it becomes possible to select a more appropriate travel path as a travel path used for drive assistance.

In addition, a fourteenth configuration is as follows:

The drive assistance device includes a speed plan generating means (51) for generating a speed plan for a vehicle as assistance information, based on the static travel path, the dynamic travel path, and the map information (15), the assistance information being used for drive assistance to be provided on a vehicle that travels along the static travel path in which the dynamic travel path is reflected.

According to the drive assistance device having the above-described configuration, by reflecting a generated dynamic travel path in an existing static travel path, it becomes possible to modify a travel path for the vehicle as necessary, and also obtain a speed of the vehicle recommended to travel along the modified travel path.

In addition, a fifteenth configuration is as follows:

The drive assistance device includes location identifying means (51) for identifying speed change locations where a speed of a vehicle changes on the planned travel route, using the map information (15) including speed limit information of roads, and the speed plan generating means (51) generates, for each of the speed change locations, a recommended speed at which the vehicle passes through the speed change location, and generates a speed plan so that a speed change between the speed change locations satisfies a predetermined condition.

According to the drive assistance device having the above-described configuration, even when a speed change location is included in a planned travel route, it becomes possible to generate a speed plan that allows the vehicle to pass through the speed change location at a recommended speed and that does not place strain on a passenger of the vehicle that is traveling.

In addition, a sixteenth configuration is as follows:

The dynamic travel path generating means (51) generates, when detecting that a factor that affects travel of a vehicle is present around a vehicle (5), the dynamic travel path targeting a section including the factor, and the speed plan generating means (51) generates a speed plan for a section in which the dynamic travel path is generated, based on the dynamic travel path and the factor.

According to the drive assistance device having the above-described configuration, for example, when a travel path for avoiding a factor or a travel path for traveling following the factor is generated as a dynamic travel path, it becomes possible to generate a speed plan that maintains an appropriate vehicle-to-vehicle distance with the factor or a speed plan that does not place strain on a passenger of the vehicle that is traveling.

In addition, a seventeenth configuration is as follows:

The drive assistance means (51) provides autonomous driving assistance for a vehicle.

According to the drive assistance device having the above-described configuration, when the vehicle travels by autonomous driving assistance, it becomes possible to generate, based on information about section lines on roads, a travel path for the vehicle that takes into account restrictions, etc., on the roads. Particularly, even when a section in which movement of the vehicle between lanes is restricted or a region in which it is not desirable for the vehicle to travel (e.g., a guide zone) is set on a road, it becomes possible to generate a more appropriate travel path for the vehicle compared to conventional ones. Then, by providing autonomous driving assistance based on the generated travel path, the autonomous driving assistance can be appropriately provided.

In addition, an eighteenth configuration is as follows:

The static path generating means (51) generates, on a lane-by-lane basis, the static travel path that identifies a travel path along which a vehicle is recommended to travel, the lanes being included in the planned travel route.

According to the drive assistance device having the above-described configuration, it becomes possible to generate a travel path for the vehicle that identifies how the vehicle moves to lanes included in a road and travels. As a result, even when the vehicle travels on a road including a plurality of lanes, it becomes possible to generate a more appropriate travel path for the vehicle compared to conventional ones.

REFERENCE SIGNS LIST

1: Navigation device, 2: Drive assistance system, 3: Information delivery center, 4: Server device, 5: Vehicle, 15: High-precision map information, 33: Navigation ECU, 39: Exterior camera, 40: Vehicle control ECU, 51: CPU, 52: RAM, 53: ROM, 54: Flash memory, 61: Planned travel route, 75: Lane node, and 76: Lane link

**Claims**

1. A drive assistance device comprising:

   planned travel route obtaining means for obtaining a planned travel route along which a vehicle travels;
   static path generating means for generating a static travel path using map information including at least information about section lines, the static travel path being a travel path along which a vehicle is recommended to travel on a road included in the planned travel route; and
   drive assistance means for providing drive assistance for a vehicle based on the static travel path.

2. A drive assistance device comprising:

   planned travel route obtaining means for obtaining a planned travel route along which a vehicle travels;
   static path generating means for generating, using map information, a static travel path for a section including at least course change locations that are first and second course change locations from a current location of a vehicle among course change locations, the static travel path being a travel path along which a vehicle is recommended to travel on a road included in the planned travel route, and the course change locations being locations where a course of a vehicle changes when a vehicle travels along the planned travel route; and
   drive assistance means for providing drive assistance for a vehicle based on the static travel path.

3. The drive assistance device according to claim 2, wherein the course change locations are intersections where a vehicle is to make a left or right turn, or locations where a vehicle makes a lane change.

4. The drive assistance device according to any one of claims 1 to 3, comprising:

   dynamic travel path generating means for generating a dynamic travel path using the map information and surrounding road conditions obtained by a vehicle, the dynamic travel path being a travel path along which a vehicle is recommended to travel on a road included in the planned travel route; and
   path reflecting means for reflecting the dynamic travel path in a part of the static travel path,
   wherein
   the drive assistance means provides drive assistance for a vehicle based on the static travel path in which the dynamic travel path is reflected.

5. A drive assistance device comprising:

   road conditions obtaining means for obtaining road conditions of a predetermined detection area around a vehicle;
   planned travel route obtaining means for obtaining a planned travel route along which a vehicle travels;
   static path generating means for generating, using map information, a static travel path for a region including outside the detection area, the static travel path being a travel path along which a vehicle is recommended to travel on a road included in the planned travel route;
   dynamic travel path generating means for generating a dynamic travel path for the detection area, using map information and surrounding road conditions obtained by a vehicle, the dynamic travel path being a travel path along which a vehicle is recommended to travel on a road included in the planned travel route; and
   drive assistance means for providing drive assistance for a vehicle based on a generated travel path, the generated travel path being a travel path generated using the static travel path and the dynamic travel path.

6. The drive assistance device according to claim 5, wherein the static path generating means generates the static travel path using map information including at least information about section lines.

7. The drive assistance device according to claim 5 or 6, wherein the road conditions obtaining means obtains, as the road conditions, a distance from a vehicle to an object present around a vehicle.

8. The drive assistance device according to any one of claims 5 to 7, comprising path reflecting means for reflecting the dynamic travel path in a part of the static travel path,

   wherein
   the generated travel path is the static travel path in which the dynamic travel path is reflected.

9. The drive assistance device according to claim 4 or 8, wherein

   the dynamic travel path generating means generates, when detecting that a factor that affects travel of a vehicle is present around a vehicle, a dynamic travel path targeting a section including the factor, and
   the path reflecting means reflects, when the dynamic travel path is generated, the dynamic travel path in the static travel path, targeting a section in which the dynamic travel path is generated.

10. The drive assistance device according to claim 9, wherein the dynamic travel path is a travel path that returns to the static travel path from a current location of a vehicle, avoiding the factor, and that is generated targeting a section from the current location of a vehicle to a location where the vehicle returns to the static travel path, avoiding the factor, or a travel path that follows the factor and that is generated targeting a section in which the vehicle follows the factor.

11. The drive assistance device according to any one of claim 4, 8 to 10, wherein the path reflecting means reflects the dynamic travel path in the static travel path by replacing a part of the static travel path by the dynamic travel path.

12. The drive assistance device according to claim 11, wherein

the path reflecting means
determines which one of the static travel path and the dynamic travel path is recommended, taking into account at least one of travel time, a number of lane changes, locations where a lane change is made, and a travel lane, and replaces a part of the static travel path by the dynamic travel path when it is determined that the dynamic travel path is recommended.

13. The drive assistance device according to claim 12, wherein the path reflecting means calculates costs for the static travel path and the dynamic travel path, taking into account at least one of travel time, a number of lane changes, locations where a lane change is made, and a travel lane, and selects one of the static travel path and the dynamic travel path that has a minimum cost, as a recommended travel path.

14. The drive assistance device according to any one of claims 4, 8 to 13, comprising a speed plan generating means for generating a speed plan for a vehicle as assistance information, based on the static travel path, the dynamic travel path, and the map information, the assistance information being used for drive assistance to be provided on a vehicle that travels along the static travel path in which the dynamic travel path is reflected.

15. The drive assistance device according to claim 14, comprising location identifying means for identifying speed change locations where a speed of a vehicle changes on the planned travel route, using the map information including speed limit information of roads,

wherein
the speed plan generating means generates, for each of the speed change locations, a recommended speed at which the vehicle passes through the speed change location, and generates a speed plan so that a speed change between the speed change locations satisfies a predetermined condition.

16. The drive assistance device according to claim 15, wherein

the dynamic travel path generating means generates, when detecting that a factor that affects travel of a vehicle is present around a vehicle, a dynamic travel path targeting a section including the factor, and
the speed plan generating means generates a speed plan for a section in which the dynamic travel path is generated, based on the dynamic travel path and the factor.

17. The drive assistance device according to any one of claims 1 to 16, wherein the drive assistance means provides autonomous driving assistance for a vehicle.

18. The drive assistance device according to any one of claims 1 to 17, wherein the static path generating means generates, on a lane-by-lane basis, a static travel path that identifies a travel path along which a vehicle is recommended to travel, the lanes being included in the planned travel route.

19. A computer program for causing a computer to function as:

planned travel route obtaining means for obtaining a planned travel route along which a vehicle travels;
static path generating means for generating a static travel path using map information including at least information about section lines, the static travel path being a travel path along which a vehicle is recommended to travel on a road included in the planned travel route; and
drive assistance means for providing drive assistance for a vehicle based on the static travel path.

20. A computer program for causing a computer to function as:

planned travel route obtaining means for obtaining a planned travel route along which a vehicle travels;
static path generating means for generating, using map information, a static travel path for a section including at least course change locations that are first and second course change locations from a current location of a vehicle among course change locations, the static travel path being a travel path along which a vehicle is recommended to travel on a road included in the planned travel route, and the course change locations being locations where a course of a vehicle changes when a vehicle travels along the planned travel route; and
drive assistance means for providing drive assistance for a vehicle based on the static travel path.

21. A computer program for causing a computer to function as:

road conditions obtaining means for obtaining road conditions of a predetermined detection area around a vehicle;
planned travel route obtaining means for obtaining a planned travel route along which a vehicle travels;
static path generating means for generating, using map information, a static travel path for a region including outside the detection area, the static travel path being a travel path along which a vehicle is recommended to travel on a road included in the planned travel route;
dynamic travel path generating means for generating a dynamic travel path for the detection area, using map information and surrounding road conditions obtained by a vehicle, the dynamic travel path being a travel path along which a vehicle is recommended to travel on a road included in the planned travel route; and
drive assistance means for providing drive assistance for a vehicle based on a generated travel path, the generated travel path being a travel path generated using the static travel path and the dynamic travel path.

*FIG. 1*

## FIG. 2

Server device 4

Server control part

22 — RAM

21 —

CPU

23 —

24 — Flash memory

ROM

Server-side map DB

Center communication device

13 —

High-precision map DB

High-precision map information

Lane configuration information

Section line information

12

14

15

6

2

Navigation device 1

. . . .

Navigation device 1

Vehicle 5

Vehicle 5

## FIG. 3

FIG. 4

```
                    ┌─────────────┐
                    │    START    │
                    └──────┬──────┘
                           │           ┌─ S1
                           ▼
          ┌────────────────────────────────┐
          │   Obtain planned travel route   │
          └────────────────┬───────────────┘
                           │           ┌─ S2
                           ▼
          ┌────────────────────────────────┐
          │   Obtain high-precision map     │
          │        information              │
          └────────────────┬───────────────┘
                           │           ┌─ S3
                           ▼
          ┌────────────────────────────────┐
          │   Static travel path generating │
          │           process               │
          └────────────────┬───────────────┘
                           │           ┌─ S4
                           ▼
          ┌────────────────────────────────┐
          │  Speed plan generating process  │
          └────────────────┬───────────────┘
                           │
                           ▼           ┌─ S5
                  ◇ Is there factor that may ◇── NO
                  ◇      affect travel?       ◇
                           │ YES      ┌─ S6
                           ▼
          ┌────────────────────────────────┐
          │    Dynamic travel path          │
          │     generating process          │
          └────────────────┬───────────────┘
                           │           ┌─ S7
                           ▼
          ┌────────────────────────────────┐
          │   Travel path reflecting process │
          └────────────────┬───────────────┘
                           │           ┌─ S8
                           ▼
          ┌────────────────────────────────┐
          │   Speed plan modifying process  │
          └────────────────┬───────────────┘
                           │           ┌─ S9
                           ▼
          ┌────────────────────────────────┐
          │  Compute amounts of control for │
          │   traveling along control path  │
          └────────────────┬───────────────┘
                           │           ┌─ S10
                           ▼
          ┌────────────────────────────────┐
          │     Reflect amounts of control  │
          └────────────────┬───────────────┘
                           │           ┌─ S11
                           ▼
             YES  ◇  Traveled certain  ◇
                  ◇     distance?       ◇
                           │ NO        ┌─ S12
                           ▼
                  ◇ Terminate autonomous ◇── NO
                  ◇   driving travel?     ◇
                           │ YES
                           ▼
                    ┌─────────────┐
                    │     END     │
                    └─────────────┘
```

*FIG. 5*

## FIG. 6

```
                    ( Static travel path generating process )
                                    |
                                    |            S21
                                    v
                    ┌─────────────────────────────────┐
                    │   Obtain current location of vehicle │
                    │     (including locations of lanes)   │
                    └─────────────────────────────────┘
                                    |
                                    |            S22
                                    v
                    ┌─────────────────────────────────┐
                    │ Obtain lane configurations, section line │
                    │  information, and the like, in front in  │
                    │           traveling direction            │
                    └─────────────────────────────────┘
                                    |
                                    |            S23
                                    v
                    ┌─────────────────────────────────┐
                    │        Construct lane network        │
                    └─────────────────────────────────┘
                                    |
                                    |            S24
                                    v
                    ┌─────────────────────────────────┐
                    │   Select route for movement to lanes that │
                    │    has minimum total value of lane costs  │
                    └─────────────────────────────────┘
                                    |
                                    |            S25
                                    v
                    ┌─────────────────────────────────┐
                    │   Calculate travel path for making lane  │
                    │ changes, taking into account lane change │
                    │      locations and clothoid shape        │
                    └─────────────────────────────────┘
                                    |
                                    |            S26
                                    v
                    ┌─────────────────────────────────┐
                    │ Calculate travel path within intersection,│
                    │     taking into account clothoid shape    │
                    └─────────────────────────────────┘
                                    |
                                    |            S27
                                    v
                    ┌─────────────────────────────────┐
                    │   Generate final static travel path by   │
                    │        connecting travel paths           │
                    └─────────────────────────────────┘
                                    |
                                    v
                           (        RETURN        )
```

30

FIG. 7

Destination

72

73

71

Current location of vehicle

## FIG. 8

Current location of vehicle

## FIG. 9

Lane change
coefficient α

81

1

1.2

1.5

82

83

76

75

## FIG. 10

First pattern

Second pattern

Third pattern

## FIG. 11

Location in lane exiting intersection

Location on guideline

Location where vehicle exits intersection

Location where vehicle enters

Location in lane entering intersection

# FIG. 12

```
        ( Speed plan generating process )
                       |
                       |  ⌒S31
                       v
        ┌──────────────────────────────────┐
        │    Obtain speed limit information of │
        │         planned travel route         │
        └──────────────────────────────────┘
                       |
                       |  ⌒S32
                       v
        ┌──────────────────────────────────┐
        │    Identify speed change locations   │
        │        on planned travel route       │
        └──────────────────────────────────┘
                       |
                       |  ⌒S33
                       v
        ┌──────────────────────────────────┐
        │      Set recommended speed for       │
        │       each speed change location     │
        └──────────────────────────────────┘
                       |
                       |  ⌒S34
                       v
        ┌──────────────────────────────────┐
        │ Set speed limit as recommended speed for │
        │  section between speed change locations  │
        └──────────────────────────────────┘
                       |
                       |  ⌒S35
                       v
        ┌──────────────────────────────────┐
        │     Generate speed plan by modifying     │
        │  recommended speeds so that acceleration │
        │  and deceleration are less than or equal to │
        │             threshold value             │
        └──────────────────────────────────┘
                       |
                       v
                ( RETURN )
```

*FIG. 13*

Speed

Curve
section

Left/right-turn
intersection

Railroad
crossing

Speed limit

Recommended
speed

Distance from current
location of vehicle

**Acceleration and deceleration are
less than or equal to threshold value**

Speed

Curve
section

Left/right-turn
intersection

Railroad
crossing

Recommended
speed

Distance from current
location of vehicle

## FIG. 14

```
( Dynamic travel path generating process )
                    │
                    ▼  ─S41
        Obtain current location of
                  vehicle
                    │
                    ▼  ─S42
        Obtain static travel path and
        future speed plan for vehicle
                    │
                    ▼  ─S43
        Obtain lane configuration, section
        line information, and the like, for
        area in front in traveling direction
                    │
                    ▼  ─S44
            Obtain location and
            movement conditions of
            factor that affects travel
                    │
                    ▼  ─S45
    NO        Affect travel of vehicle?
     │              │
     │             YES
     │              ▼  ─S46
     │           Avoidable?          ─NO
     │              │                  │
     │             YES                 │
     │              ▼  ─S47            │
     │      Calculate avoidance path   │
     │      and recommended speed      │
     │              │                  │
     │              ▼◄─────────────────┘
     │              │  ─S48
     │      Calculate following path and
     │         recommended speed
     │              │
     │              ▼  ─S49
     │      Generate calculated paths
     │       as dynamic travel paths
     │              │
     └──────────────►
                    │
                    ▼
              ( RETURN )
```

## FIG. 15

## FIG. 16

L5

Appropriate
vehicle-to-vehicle
distance

L4

86

85

## FIG. 17

86

Appropriate
vehicle-to-vehicle
distance

85

FIG. 18

# FIG. 19

```
        ( Travel path reflecting process )
                      |
                      v            S51
        ┌──────────────────────────────┐
        │   Read generated static travel path │
        │      and dynamic travel paths  │
        └──────────────────────────────┘
                      |
                      v            S52
        ┌──────────────────────────────┐
        │ Calculate path cost for each travel path, │
        │ taking into account travel time, number │
        │  of lane changes, locations where lane │
        │   change is made, and travel lane │
        └──────────────────────────────┘
                      |
                      v            S53
        ┌──────────────────────────────┐
        │   Select travel path with minimum cost │
        └──────────────────────────────┘
                      |
                      v            S54
   NO      < Is dynamic travel path selected? >
    |                 |
    |                YES
    |                 v            S55
    |       ┌──────────────────────────────┐
    |       │  Replace part of static travel path by │
    |       │       dynamic travel path │
    |       └──────────────────────────────┘
    |                 |
    └────────────────>|
                      v
               (    RETURN    )
```

## FIG. 20

```
( Speed plan modifying process )
            |
            v           S61
      < Replaced by          > --- NO
      < avoidance path?      >     |
            | YES                  |
            v           S62        |
   [ Modify speed plan based on    |
     recommended speed for         |
     avoidance path          ]     |
            |<---------------------
            v           S63
      < Replaced by following path? > --- NO
            | YES                        |
            v           S64              |
   [ Modify speed plan based on          |
     recommended speed for               |
     following path          ]           |
            |<------------------------
            v
       ( RETURN )
```

## INTERNATIONAL SEARCH REPORT

| International application No. |
| --- |
| PCT/JP2020/022258 |

A. CLASSIFICATION OF SUBJECT MATTER

Int.Cl. B60W30/10(2006.01)i, B60W30/095(2012.01)i, B60W40/04(2006.01)i, B60W40/06(2012.01)i, G01C21/34(2006.01)i, G08G1/00(2006.01)i, G08G1/0969(2006.01)i, G08G1/16(2006.01)i

FI: B60W30/10, G08G1/0969, G08G1/16C, G01C21/34, B60W40/06, B60W40/04, G08G1/00X, B60W30/095

According to International Patent Classification (IPC) or to both national classification and IPC

B. FIELDS SEARCHED

Minimum documentation searched (classification system followed by classification symbols)

Int.Cl. B60W10/00-10/30, B60W30/00-60/00, G08G1/00-99/00, G01C21/34, G01C21/00-21/36, G01C23/00-25/00

Documentation searched other than minimum documentation to the extent that such documents are included in the fields searched

Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2017-117080 A (AISIN AW CO., LTD.) 29.06.2017 (2017-06-29), claim 1, paragraphs [0018], [0022], [0028], [0029], [0031], [0037], [0041]-[0066], [0087]-[0115] | 1-21 |
| A | JP 2019-128962 A (BAIDU USA LLC) 01.08.2019 (2019-08-01), entire text, all drawings | 1-21 |
| A | JP 2018-72070 A (PIONEER CORPORATION) 10.05.2018 (2018-05-10), entire text, all drawings | 1-21 |
| A | JP 2012-216069 A (EQUOS RESEARCH CO., LTD.) 08.11.2012 (2012-11-08), entire text, all drawings | 1-21 |
| A | JP 2019-131077 A (HONDA MOTOR CO., LTD.) 08.08.2019 (2019-08-08), entire text, all drawings | 1-21 |
| A | US 2019/0212749 A1 (NVIDIA CORPORATION) 11.07.2019 (2019-07-11), entire text, all drawings | 1-21 |

☐ Further documents are listed in the continuation of Box C.    ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 18.08.2020 | 01.09.2020 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2020/022258

| | | |
|---|---|---|
| JP 2017-117080 A | 29.06.2017 | US 2018/0345963 A1<br>claim 1, paragraphs [0037], [0041],<br>[0047], [0048], [0050],<br>[0056], [0060]-[0085],<br>[0106]-[0134]<br>WO 2017/110892 A1<br>CN 108369777 A |
| JP 2019-128962 A | 01.08.2019 | US 2019/0235516 A1<br>EP 3517893 A1<br>CN 110083149 A |
| JP 2018-72070 A | 10.05.2018 | (Family: none) |
| JP 2012-216069 A | 08.11.2012 | (Family: none) |
| JP 2019-131077 A | 08.08.2019 | CN 110103962 A |
| US 2019/0212749 A1 | 11.07.2019 | WO 2019/136375 A1<br>CN 110248861 A |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190155292 A